# EUROPÄISCHE PATENTSCHRIFT

(11) **EP 1 562 810 B1**
(45) Veröffentlichungstag und Bekanntmachung des Hinweises auf die Patenterteilung: **04.07.2007**
(21) Anmeldenummer: 03780001.8
(22) Anmeldetag: 20.11.2003
(51) Int. Cl.: B60T 8/00

(54) **VERFAHREN UND VORRICHTUNG ZUR STABILISIERUNG EINES FAHRZEUGGESPANNES**
METHOD AND DEVICE FOR STABILISING A SEMI-TRAILER
PROCEDE ET DISPOSITIF DE STABILISATION D'UN SEMI-REMORQUE

(30) Priorität: 22.11.2002 DE 10254810
(43) Veröffentlichungstag der Anmeldung: 17.08.2005
(73) Patentinhaber: DaimlerChrysler AG, 70327 Stuttgart (DE)
(72) Erfinder: GUNNE, Harald, 71069 Stuttgart (DE); MOHN, Frank-Werner, 71093 Weil Im Schönbuch (DE); WILLIAMS, John, Michael, Detroit, MI 48224 (US)
(86) Internationale Anmeldenummer: PCT/EP2003/012987
(87) Internationale Veröffentlichungsnummer: WO 2004/048171

(56) Entgegenhaltungen:
- DE-A- 10 032 230
- DE-A- 10 034 222
- DE-A- 10 048 418

## Beschreibung

Die Erfindung betrifft ein Verfahren und eine Vorrichtung zur Stabilisierung eines Fahrzeuggespannes.

Bei Fahrzeuggespannen lässt sich das Phänomen feststellen, dass sie mit zunehmender Geschwindigkeit zu Schlingerbewegungen neigen.

Der Einfachheit halber wird nachfolgend zur Bezeichnung des instabilen Zustandes eines Fahrzeuggespannes, der mit Hilfe des erfindungsgemäßen Verfahrens bzw. der erfindungsgemäßen Vorrichtung beseitigt werden kann, der Begriff Schlingerbewegung verwendet. Dies soll keine Einschränkung darstellen. Es können auch die beiden Begriffe Pendelbewegung oder Schwingbewegung zur Bezeichnung besagten Zustandes verwendet werden.

An dieser Stelle soll zunächst erklärt werden, was unter dem Begriff Schlingerbewegung zu verstehen ist: Kommt es bei einem Fahrzeuggespann zu einer Schlingerbewegung, so schwingt der Anhänger um seine Hochachse und regt über die Anhängerkupplung auch das Zugfahrzeug zu Schwingungen an. Liegt die Fahrzeuggeschwindigkeit unterhalb einer sogenannten kritischen Geschwindigkeit, so sind die Schwingungen gedämpft. Ist die Fahrzeuggeschwindigkeit gleich der kritischen Geschwindigkeit, so sind die Schwingungen ungedämpft. Liegt die Fahrzeuggeschwindigkeit oberhalb der kritischen Geschwindigkeit, so klingen die angeregten Schwingungen nicht mehr von selbst ab, sie schaukeln sich auf. Das Fahrzeuggespann schaukelt sich in seiner Querbewegung immer weiter auf, was u. U. zu einem Unfall führen kann. Die Anregung der Schlingerbewegungen kann beispielsweise durch Lenkungseingriffe des Fahrers, die für eine bestimmte Fahrsituation ungeeignet sind, durch das Überfahren einer Bodenwelle oder durch Seitenwindeinflüsse verursacht werden.

Der Wert der kritischen Geschwindigkeit hängt unter anderem von Geometriedaten wie Radstand und Deichsellänge, von der Masse und dem Gierträgheitsmoment des Zugfahrzeuges und des Anhängers und von den Schräglaufsteifigkeiten der Reifen und/oder Achsen ab. Der Wert für die kritische Geschwindigkeit bewegt sich bei Fahrzeuggespannen im Pkw-Bereich typischerweise im Bereich von 70 bis 130 Stundenkilometer. Die Frequenz der Schlingerbewegung beträgt ungefähr 0,5 bis 2 Hz.

Liegt eine Schlingerbewegung vor, dann kommt es an dem Zugfahrzeug, welches den Anhänger zieht, zu einer im wesentlichen periodischen Querbewegung, die sich beispielsweise in der Querbeschleunigung oder der Gierwinkelgeschwindigkeit des Zugfahrzeuges wiederfindet. Somit liegt bei einer Schlingerbewegung ein im wesentliches periodisches Signal der Querbeschleunigung bzw. der Giergeschwindigkeit vor. Es handelt sich dabei nicht um eine streng periodische Pendelerscheinung, da das Fahrzeuggespann kein ideales Pendel darstellt. Vielmehr können zeitliche Schwankungen in der Periodendauer der Pendelbewegung des Anhängers auftreten. Diese finden sich beispielsweise in dem von einem Querbeschleunigungssensor erzeugten sich wiederholenden bzw. wiederkehrenden bzw. im wesentlichen periodischen Signal wieder. D.h. dieses Signal weist eine sich in kleinen Grenzen ändernde Periodendauer auf, die idealerweise jedoch als zeitlich konstant anzusehen ist. Entsprechendes gilt auch für das Signal eines Gierwinkelgeschwindigkeitssensors.

Entsprechend ist auch ein einzuprägendes Giermoment, mit dem das von der Schlingerbewegung herrührende Giermoment kompensiert werden soll, nicht streng periodisch. Entsprechend den Schwankungen in der Periode der Schlinger- bzw. Pendelbewegung des Fahrzeuggespanns wird auch die Periodendauer im einzuprägenden Giermoment verändert.

Verfahren und Vorrichtungen zur Stabilisierung von Fahrzeuggespannen sind aus dem Stand der Technik in vielerlei Modifikation bekannt.

So ist in der in der Automobiltechnischen Zeitschrift (ATZ) 104, 2002, Heft 4, auf den Seiten 330 bis 339 erschienenen Veröffentlichung "Aktive Gespannstabilisierung beim BMW X5" eine Vorrichtung zur Gespannstabilisierung beschrieben, mit der unabhängig von den Eigenschaften des vorliegenden Gespannes und der Fahrgeschwindigkeit auftretende Pendelschwingungen erkannt und bei Überschreiten gewisser Grenzwerte durch aktives Bremsen des Zugfahrzeuges das Gespann wieder in den sicheren Fahrzustand überführen werden können. Die Erkennung der Pendelschwingung beruht im wesentlichen auf einer Analyse der gemessenen Giergeschwindigkeit. Die Giergeschwindigkeit wird mit einem Bandpassfilter, der auf das Frequenzband 0,5 Hz und 1,0 Hz dimensioniert ist, gefiltert und die Amplitude des gefilterten Signals bestimmt. Anhand dieser Gieramplitude wird entschieden, ob ein Bremseneingriff zur Stabilisierung des Fahrzeuggespannes erforderlich ist. Neben dem Momentanwert der Gieramplitude wird auch das zeitliche Verhalten der Gieramplitude ausgewertet. Wurde ein instabiler Zustand des Fahrzeuggespannes erkannt, so wird das Zugfahrzeug durch aktive Druckaufbauten symmetrisch an allen vier Rädern soweit abgebremst, bis die Pendelbewegung genügend abgeklungen ist. Hierzu wird ein konstanter Wert für die Sollverzögerung vorgegeben, der von einem Verzögerungsregler eingestellt wird. Gleichzeitig wird das Antriebsmoment auf Null begrenzt. Zusätzlich zu dem symmetrischen Bremseneingriff können während einer Pendelbewegung auch die von einer Gierratenregelung herrührenden radindividuellen Bremseneingriffe durchgeführt werden, die dann dem symmetrischen Bremseneingriff überlagert werden.

In der DE 195 36 620 A1 ist ein Verfahren zur Verbesserung der Querstabilität eines Fahrzeuggespannes beschrieben. Gemäß diesem Verfahren werden fahrzeugverzögernde Maßnahmen ergriffen, wenn die Amplitude einer querdynamischen Fahrzeuggröße, beispielsweise die Querbeschleunigung oder die Gierwinkelgeschwindigkeit, innerhalb eines vorgegebenen Frequenzbandes schwingt und dabei einen Grenzwert überschreitet. Bei den fahrzeugverzögernden Maßnahmen handelt es sich um Eingriffe zur Reduzierung des Drosselklappenöffnungswinkels zur Reduzierung des Antriebsmomentes und/oder um Eingriffe zur Einspeisung von Bremsdruck an den Vorderrädern und den Hinterrädern des Zugfahrzeuges.

In der DE 100 31 266 A1 ist ein Verfahren und eine Vorrichtung zur Erkennung einer Pendelbewegung eines Fahrzeuges beschrieben. Das Fahrzeug ist mit Mitteln zur Beeinflussung des vom Motor abgegebenen Moments und den Rädern des Fahrzeuges zugeordneten Bremsen ausgestattet. Bei einer erkannten Pendelbewegung werden die Mittel zur Beeinflussung des vom Motor abgegebenen Moments und die Bremsen, diese werden gleichmäßig angesteuert, im Sinne einer Reduzierung der Fahrzeuggeschwindigkeit angesteuert. Alternativ ist vorgesehen, bei einer erkannten Pendelbewegung des Fahrzeuges, die Radbremsen individuell so anzusteuern, dass dadurch ein auf das Fahrzeug wirkendes Giermoment erzeugt wird, welches der Pendelbewegung entgegenwirkt.

In der DE 100 34 222 A1 ist ein Verfahren und eine Vorrichtung zur Stabilisierung eines Fahrzeuggespannes beschrieben. Wird eine Schlingerbewegung erkannt, dann werden stabilisierende Eingriffe durchgeführt. Bei einer ersten Vorgehensweise werden an den Bremsen des Zugfahrzeuges phasenrichtige Bremseneingriffe durchgeführt. Gleichzeitig werden die Bremsen des Anhängers gleichmäßig gebremst. Alternativ zu den phasenrichtigen Bremseneingriffen an dem Zugfahrzeug können entsprechende Lenkungseingriffe vorgenommen werden. Bei einer zweiten Vorgehensweise wird gezielt nur der Anhänger gebremst.

In der DE 199 64 048 A1 ist ein Verfahren und eine Einrichtung zur Stabilisierung eines Fahrzeuggespannes beschrieben. Wird für das Fahrzeuggespann eine Schlingerbewegung erkannt, dann wird ein im wesentlichen periodisches Giermoment eingeprägt, das der Schlingerbewegung im wesentlichen gegenphasig ist. Das Einprägen der Giermoments erfolgt durch automatisches Abbremsen des Straßenfahrzeuges, wobei auf den beiden Seiten des Straßenfahrzeuges unterschiedliche Bremskräfte dergestalt eingeprägt werden, dass das Fahrzeug automatisch einseitig abgebremst wird. Nach und/oder zusätzlich zum Einprägen des im wesentlichen periodischen Giermomentes wird das Straßenfahrzeug automatisch kurzzeitig derart abgebremst, dass die Auflaufbremse des Anhängers ausgelöst wird. Dieses kurzzeitige Abbremsen kann durch einen Eingriff in die Radbremsen des Zugfahrzeuges oder durch Verringerung des Antriebsmomentes erreicht werden. Je nach Ausstattungsgrad des Fahrzeuges werden unterschiedliche Bremseneingriffe durchgeführt. Ist das Fahrzeug mit einer Gierratenregelung (ESP, FDR) ausgestattet, dann können alle Räder des Zugfahrzeuges einzeln gebremst werden, um das im wesentlichen periodische Giermoment einzuprägen. Darüber hinaus können auch alle Räder gleichzeitig gebremst werden oder durch entsprechende Motoreingriffe die Motorleistung reduziert werden, so dass die Auflaufbremse des Anhängers aktiviert wird. Handelt es sich um ein heckgetriebenes Fahrzeug oder um ein allradgetriebenes Fahrzeug, welches mit einer Antriebsschlupfregelung (ASR) ausgestattet ist, so kann das im wesentliche periodische Giermoment durch Bremseneingriffe an der Hinterachse eingeprägt werden. Handelt es sich dagegen um ein frontgetriebenes Fahrzeug, welches mit einer Antriebsschlupfregelung (ASR) ausgestattet ist, so besteht die vorstehend beschriebene Möglichkeit der Stabilisierung nicht. In diesem Fall können lediglich sämtliche Räder des Zugfahrzeuges gebremst werden. Auch bei einem Fahrzeug, welches lediglich mit einem Antiblockiersystem (ABS) ausgestattet ist, werden zur Stabilisierung des Fahrzeuggespannes alle Räder des Zugfahrzeuges gebremst, was gleichzeitig zu einer Aktivierung der Auflaufbremse des Anhängers führt.

In der DE 100 07 526 A1 ist ein Verfahren und eine Vorrichtung zur Stabilisierung des Fahrdynamikzustandes von Gespannen beschrieben. Wird ein instabiler Fahrdynamikzustand erkannt, wird durch einen Eingriff in den Motor und/oder in die Bremsen des Zugfahrzeuges die Längsgeschwindigkeit des Zugfahrzeuges vermindert. Alternativ zu den Eingriffen, durch die die Längsgeschwindigkeit des Zugfahrzeuges reduziert wird, kann am Zugfahrzeug ein einseitiger Bremseneingriff durchgeführt werden, durch den eine Verringerung des Knickwinkels erzielt wird.

Ein Verfahren und eine Vorrichtung zur Stabilisierung eines Fahrzeuggespannes gemäß dem Oberbegriff von Anspruch 1 bzw. von Anspruch 27 ist aus DE 10 048 418 A1 bekannt.

Nachteilig an den aus dem Stand der Technik bekannten Verfahren oder Vorrichtungen zur Stabilisierung eines Fahrzeuggespannes ist, dass entweder hauptsächlich oder ausschließlich an den Hinterrädern Bremseneingriffe durchgeführt werden oder aber dass die Vorderräder und die Hinterräder immer zusammen, d.h. gleichzeitig, und zwar entweder gleichmäßig oder individuell gebremst werden. Durch diese Art der Bremseneingriffe werden an den Hinterrädern Längskräfte, d.h. Umfangskräfte erzeugt, was dazu führt, dass gleichzeitig Seitenführungskräfte abgebaut werden, die im Falle eines schlingernden Fahrzeuggespannes zur Stabilisierung desselben benötigt werden würden. Mit anderen Worten: Durch diese Bremseneingriffe an den Hinterrädern wird das Seitenführungskraftpotential an diesen herabgesetzt. Dies kann dann, wenn die Fahrbahnverhältnisse entsprechend sind, beispielsweise bei Vorliegen eines niedrigen Fahrbahnreibwerts (nasse oder schneebedeckte oder vereiste Fahrbahn), zu einer Erhöhung bzw. Verstärkung des instabilen Verhaltens des Fahrzeuggespannes, d.h. der Schlingerbewegung des Fahrzeuggespannes führen, obwohl durch die zu Stabilisierungszwecken vorgenommenen Bremseneingriffe eigentlich die Beseitigung des instabilen Verhaltens des Fahrzeuggespannes erreicht werden sollte.

Vor diesem Hintergrund ergibt sich folgende Aufgabe für den Fachmann: Es sollen bestehende Verfahren und Vorrichtungen zur Stabilisierung von Fahrzeuggespannen verbessert werden.

U.a. soll erreicht werden, dass während der Zeitdauer, in der die Eingriffe zur Stabilisierung des Fahrzeuggespannes durchgeführt werden, ein für die Stabilisierung des Fahrzeuggespannes ausreichend hohes Seitenführungskraftpotential, vornehmlich an den Hinterrädern des Zugfahrzeuges, vorhanden bzw. gewährleistet ist.

Diese Aufgabe wird durch ein Verfahren gemäss Anspruch 1 und eine Vorrichtung gemäss Anspruch 27 gelöst.

Bei dem Verfahren zur Stabilisierung eines Fahrzeuggespannes, welches zur Lösung der vorstehenden Aufgabe vorgeschlagen wird, wird wenigstens eine fahrdynamische Eingangsgröße ermittelt und ausgewertet. Wenn anhand der Auswertung eine Schlingerbewegung des Fahrzeuggespannes festgestellt wird, werden für das Zugfahrzeug wenigstens Bremseneingriffe zur Stabilisierung des Fahrdynamikzustandes des Fahrzeuggespanns veranlasst. Erfindungsgemäß wird allein durch für die Vorderräder des Zugfahrzeuges veranlasste Bremseneingriffe ein der Schlingerbewegung des Fahrzeuggespannes entgegenwirkendes Giermoment erzeugt. Bei diesen für die Vorderräder veranlassten Bremseneingriffen handelt es sich um fahrerunabhängig durchgeführte Bremseneingriffe.

Dadurch dass das der Schlingerbewegung des Fahrzeuggespannes entgegenwirkende Giermoment allein durch die für die Vorderräder veranlassten Bremseneingriffe erzeugt wird, ist sichergestellt, dass das für die Stabilisierung des Fahrzeuggespannes erforderliche Seitenführungskraftpotential, insbesondere an den Hinterrädern, in ausreichendem Maße zur Verfügung steht.

Damit keine Verminderung dieses so bedeutsamen Seitenführungskraftpotentials eintritt, wird vom Grundsatz her auf die Durchführung von Bremseneingriffen an den Hinterrädern des Zugfahrzeuges verzichtet. D.h. auf die Durchführung von Bremseneingriffen an den Hinterrädern wird weitestgehend verzichtet. Bremseneingriffe für die Hinterräder des Zugfahrzeuges werden zusätzlich zu den vorstehend aufgeführten Bremseneingriffen für die Vorderräder nur bei Vorliegen eines vorgegebenen Betriebszustandes des Fahrzeuggespannes derart zugelassen oder veranlasst, dass an den Hinterrädern eine im wesentlichen Konstante Bremswirkung erzielt wird. Dadurch wird sichergestellt, dass in bestimmten Situationen, in denen die an den Vorderrädern erzielte Bremswirkung nicht ausreicht, um das Fahrzeuggespann nachhaltig zu stabilisieren bzw. zu verzögern, eine Erhöhung der insgesamt auf das Fahrzeuggespann wirkenden Bremswirkung und somit der Verzögerung möglich ist, was wiederum dazu führt, dass das Fahrzeuggespann besser stabilisiert werden kann.

Gemäß der vorliegenden Erfindung werden vorteilhafterweise solche Bremseneingriffe für die Vorderräder veranlasst, die Bremskräfte bewirken, welche sich jeweils aus einer Basiskraft und einem dynamischen Kraftanteil zusammensetzen. Solche Bremseneingriffe, die als oszillierend bezeichnet werden können, haben gegenüber Bremseneingriffen, welche lediglich eine gleichmäßige, d.h. konstante Bremskraft erzeugen, den Vorteil, dass mit solchen oszillierenden Bremseneingriffen ein Gegengiermoment erzeugt werden kann, welches der Schlingerbewegung des Fahrzeuggespannes entgegenwirkt. Dieses Gegengiermoment ist zu der Schlingerbewegung des Fahrzeuggespannes im Wesentlichen gegenphasig. Mit Bremseneingriffen, mit denen eine gleichmäßige bzw. konstante Bremswirkung erzeugt wird, lässt sich ein Gegengiermoment nicht aufbauen. Werden beispielsweise alle Räder des Fahrzeuges gleichzeitig dergestalt gebremst, dass an diesen eine gleichmäßige bzw. konstante Bremswirkung erzeugt wird, so heben sich die durch diese Bremseneingriffe erzeugten, auf das Fahrzeug wirkenden Momente gegenseitig auf; mit dieser Art von Bremseneingriffen lässt sich ein Gegengiermoment nicht aufbauen.

Vorteilhafterweise erfolgt der Aufbau der zusätzlichen Bremswirkung an der Hinterachse dergestalt, dass der Wert der Fahrzeugverzögerung, die sich aufgrund des vom Fahrer eingeleiteten oder durchgeführten Bremsvorganges eingestellt hat, erhalten bleibt. Für den Fahrer bleibt somit die von ihm spürbare Verzögerung erhalten. Es kommt zu keinen Irritationen durch eine eventuell sich ändernde Verzögerung während der fahrerunabhängig durchgeführten Stabilisierungseingriffen.

Bei dem vom Fahrer eingeleiteten oder durchgeführten Bremsvorgang handelt es sich um eine sogenannte fahrerabhängige Bremsung, der eine Betätigung des Bremspedals durch den Fahrer zugrunde liegt. Solch eine Bremsung kann durch den vom Fahrer eingestellten Vordruck oder durch ein von einem Bremslichtschalter abgegebenes Signal oder durch ein Signal, welches die Auslenkung des Bremspedals repräsentiert, erfasst werden.

Ein vorgegebener Betriebszustand des Fahrzeuggespannes, bei dem Bremseneingriffe für die Hinterräder zugelassen werden, liegt beispielsweise dann vor, wenn eine Schlingerbewegung des Fahrzeuggespannes festgestellt wird und gleichzeitig keine Bremsung durch den Fahrer vorliegt und sich das Fahrzeuggespann auf einer Fahrbahn mit niedrigem Reibwert befindet. D.h. für den Fall, dass eine Schlingerbewegung des Fahrzeuggespannes festgestellt wird und keine Bremsung durch den Fahrer vorliegt und sich das Fahrzeuggespann auf einer Fahrbahn mit niedrigem Reibwert befindet, werden zusätzlich Bremseneingriffe für die Hinterräder zugelassen. In dieser Konstellation werden nicht zwangsläufig fahrerunabhängige Stabilisierungseingriffe vorgenommen. Vielmehr werden Vorkehrungen getroffen, dass solche Eingriffe vorgenommen werden können, wenn hierfür eine Notwendigkeit besteht. Dadurch ist im Bedarfsfall eine rasche Stabilisierung des Fahrzeuggespannes möglich.

Ein vorgegebener Betriebszustand des Fahrzeuggespannes, bei dem Bremseneingriffe für die Hinterräder veranlasst werden, liegt beispielsweise dann vor, wenn eine Schlingerbewegung des Fahrzeuggespannes festgestellt wird und gleichzeitig keine Bremsung durch den Fahrer vorliegt und die für die Vorderräder veranlassten Bremseneingriffe dazu führen, dass die Vorderräder zu blockieren drohen. D.h. für den Fall, dass eine Schlingerbewegung des Fahrzeuggespannes festgestellt wird und keine Bremsung durch den Fahrer vorliegt und die für die Vorderräder veranlassten Bremseneingriffe dazu führen, dass die Vorderräder zu blockieren drohen, werden zusätzlich Bremseneingriffe für die Hinterräder veranlasst. Bei dieser Konstellation tritt neben der durch die Schlingerbewegung des Fahrzeuggespannes verursachten Instabilität eine weitere Instabilität auf, nämlich die, die durch eventuell blockierende Vorderräder verursacht wird. Diese weitere Instabilität wird automatisch durch einen Blockierschutzregler (ABS), mit dem das Fahrzeuggespann ausgestattet ist, behoben. Hierzu steuert der Blockierschutzregler die den Vorderrädern zugeordneten Bremsaktuatoren derart an, dass die an den Vorderrädern ausgeübte Bremskraft soweit abgesenkt bzw. eingeregelt wird, dass ein Blockieren der Vorderräder vermieden wird. Da bei dem vorliegenden Betriebszustand des Fahrzeuggespannes die zur Stabilisierung des Fahrzeuggespannes erforderliche Bremskraft an den Vorderädern allein nicht aufgebaut werden kann, d.h. durch die Bremseneingriffe an den Vorderrädern kann eine signifikante Verzögerung des Fahrzeuges nicht erreicht werden, werden entsprechende Bremseneingriffe an den Hinterrädern des Zugfahrzeuges veranlasst. Bei dieser Konstellation ist es besser, alle Räder gleichmäßig zu bremsen, um eine Verzögerung des Fahrzeuggespannes und somit einen Abbau von kinetischer Energie zu realisieren.

Die Erkennung, ob die Vorderräder zu blockieren drohen, kann beispielsweise durch Auswertung des an den Vorderrädern vorherrschenden Schlupfes oder aber durch Auswertung eines ABS-Flags, welches bei dem vorliegenden Betriebszustand anzeigt, dass durch einen Blockierschutzregler zumindest für ein Vorderrad Bremseneingriffe vorgenommen werden, um ein Blockieren dieses Rades zu vermeiden, vorgenommen werden. D.h. es bietet sich eine Überprüfung an, bei der festgestellt wird, ob eines der Vorderräder in die Radschlupfregelung des Blockierschutzreglers kommt.

Ein weiterer vorgegebener Betriebszustand des Fahrzeuggespannes, bei dem Bremseneingriffe für die Hinterräder veranlasst werden, liegt beispielsweise dann vor, wenn die Schlingerbewegung während eines vom Fahrer eingeleiteten oder durchgeführten Bremsvorganges festgestellt wird und die sich aufgrund des vom Fahrer eingeleiteten oder durchgeführten Bremsvorganges einstellende Fahrzeugverzögerung ein vorgegebenes Vergleichskriterium erfüllt. D.h. für den Fall, dass die Schlingerbewegung während eines vom Fahrer eingeleiteten oder durchgeführten Bremsvorganges festgestellt wird und die sich aufgrund des vom Fahrer eingeleiteten oder durchgeführten Bremsvorganges einstellende Fahrzeugverzögerung ein vorgegebenes Vergleichskriterium erfüllt, werden zusätzliche Bremseneingriffe für die Hinterräder veranlasst.

Liegt die sich einstellende Fahrzeugverzögerung unterhalb eines vorgegebenen Schwellenwertes, so wird die sich an den Hinterrädern aufgrund des vom Fahrer eingeleiteten oder durchgeführten Bremsvorganges eingestellte Bremswirkung durch die für die Hinterräder veranlassten Bremseneingriffe zumindest teilweise abgebaut. Diese Maßnahme wird deshalb ergriffen, um ein für die Stabilisierung des Fahrzeuggespannes ausreichend hohes Seitenführungskraftpotential an den Hinterrädern des Zugfahrzeuges zu gewährleisten. Dieser an den Hinterrädern auftretende Verlust an Bremswirkung wird durch die an den Vorderrädern aufgrund der Basiskraft entstehenden Bremswirkung kompensiert. Gleichzeitig wird sichergestellt, dass es für den Fahrer zu keiner spürbaren Änderung in der von ihm eingestellten Verzögerung aufgrund der fahrerunabhängig durchgeführten Stabilisierungseingriffe kommt.

Vorteilhafterweise wird die sich an den Hinterrädern aufgrund des vom Fahrer eingeleiteten oder durchgeführten Bremsvorganges eingestellte Bremswirkung so weit abgebaut wird, dass der Wert der Fahrzeugverzögerung, die sich aufgrund des vom Fahrer eingeleiteten oder durchgeführten Bremsvorganges eingestellt hat, zumindest erhalten bleibt. Allerdings soll die Möglichkeit vorgesehen sein, dass ein im Zugfahrzeug enthaltenes Sicherheitssystem, beispielsweise ein ESP-System, eine höhere Bremswirkung und somit eine höhere Fahrzeugverzögerung anfordern und somit auch einstellen kann.

Liegt dagegen die sich einstellende Fahrzeugverzögerung oberhalb eines vorgegebenen Schwellenwertes, so bleibt die sich an den Hinterrädern aufgrund des vom Fahrer eingeleiteten oder durchgeführten Bremsvorganges eingestellte Bremswirkung durch die für die Hinterräder veranlassten Bremseneingriffe zumindest beibehalten. Mit dieser Maßnahme soll erreicht werden, dass eine vom Fahrer eventuell aufgrund einer entsprechenden Verkehrssituation erforderliche starke Bremsung aufrechterhalten bleibt. Als Beispiel sei eine vom Fahrer gewünschte starke Abbremsung des Fahrzeuggespannes genannt, durch die bei einem unvermeidlichen Auffahrunfall die kinetische Energie des Fahrzeuggespannes auf ein Minimum reduziert werden soll.

Vorteilhafterweise wird für den Fall, dass wenn bei einer oberhalb des vorgegebenen Schwellenwertes liegenden Fahrzeugverzögerung gleichzeitig an einem oder beiden Vorderrädern ein Eingriff eines Blockierschutzreglers (ABS) erfolgt, durch die für die Hinterräder veranlassten Bremseneingriffe an der Hinterachse eine zusätzliche Bremswirkung aufgebaut. Somit wird die Reduzierung der Verzögerung, die von den Eingriffen des Blockierschutzreglers aufgrund der Absenkung der Basiskraft an den Vorderrädern herrührt, kompensiert.

Mit Blick auf die an den Hinterrädern durchgeführten Bremseneingriffe ist im betrachteten Fall auch folgende Vorgehensweise denkbar: Zunächst wird entsprechend der grundsätzlichen, beim erfindungsgemäßen Verfahren verfolgten Idee, zunächst eine Reduzierung der Bremswirkung an den Hinterrädern durch entsprechende Bremseneingriffe zugelassen. Die Bremswirkung an den Hinterrädern wird allerdings dann durch entsprechende Bremseneingriffe wieder angehoben, wenn für wenigstens eines der Vorderräder ein Eingriff eines Blockierschutzreglers erkannt wird und gleichzeitig festgestellt wird, dass die vorliegende Fahrzeugverzögerung nicht der vom Fahrer gewünschten entspricht.

Für den Fall, dass zumindest das Zugfahrzeug mit einer hydraulischen oder elektrohydraulischen oder pneumatischen oder elektropneumatischen Bremsanlage ausgestattet ist, führen die für die Vorderräder veranlassten Bremseneingriffe dazu, dass in die den Vorderrädern zugeordneten Radbremszylinder jeweils ein Bremsdruck eingespeist wird, der sich aus einem Basisdruck und dynamischen Druckspitzen zusammensetzt. Diese Aufteilung entspricht der vorstehend dargelegten Aufteilung in Basiskraft und dynamischen Kraftanteil. Dabei wird das der Schlingerbewegung des Fahrzeuggespannes entgegenwirkende Giermoment durch den dynamischen Kraftanteil oder die dynamischen Druckspitzen erzeugt. Der an den beiden Vorderrädern eingespeiste Basisdruck bewirkt bezogen auf das einzelne Vorderrad zwar jeweils ein auf das Fahrzeug wirkendes Moment, da der Basisdruck jedoch symmetrisch an beiden Vorderrädern eingespeist wird, bewirken diese beiden Momente in der Überlagerung kein Giermoment. Der an den Vorderrädern eingespeiste Basisdruck bewirkt somit keine Drehung des Fahrzeuges um dessen Hochachse.

Vorteilhafterweise wird der Wert der Basiskraft oder der Wert des Basisdruckes in Abhängigkeit einer für die Gierwinkelgeschwindigkeit vorliegenden Abweichung ermittelt. Diese Abweichung ergibt sich vorteilhafterweise aus der Differenz des mit Hilfe eines Gierwinkelgeschwindigkeitssensors ermittelten Istwertes für die Gierwinkelgeschwindigkeit und einem mit Hilfe eines mathematischen Modells ermittelten Sollwert für die Gierwinkelgeschwindigkeit. Die Ermittlung des Wertes der Basiskraft oder des Wertes des Basisdruckes in Abhängigkeit der Abweichung der Gierwinkelgeschwindigkeit hat folgenden Vorteil: Wird beispielsweise der Sollwert von dem Istwert abgezogen, dann kann der Sollwert, bezogen auf die Anregungsenergie, als Nulllinie aufgefasst werden, während der Istwert die Anregungsenergie des schlingernden Fahrzeuggespannes repräsentiert. Folglich stellt die Abweichung ein Maß für die durch die stabilisierenden Bremseneingriffe abzubauende Anregungsenergie dar. Da Schlingerbewegungen des Fahrzeuggespannes bei Geschwindigkeiten oberhalb der kritischen Geschwindigkeit zunehmen und deshalb zur Kompensation stabilisierende Bremseneingriffe erforderlich sind, ist die Abweichung gleichzeitig auch ein Maß für die abzubauende kinetische Energie. Durch den Wert der Abweichung lässt sich somit die Stärke der durchzuführenden Bremseneingriffe festlegen.

Vorteilhafterweise wird der Wert für den dynamischen Kraftanteil oder der Wert für die dynamischen Druckspitzen in Abhängigkeit einer Größe ermittelt, die die zeitliche Änderung einer für die Gierwinkelgeschwindigkeit vorliegenden Abweichung beschreibt. Für die Ermittlung dieser Größe bieten sich verschiedene Vorgehensweisen an. So kann diese Größe als zeitliche Ableitung der für die Gierwinkelgeschwindigkeit vorliegenden Regelabweichung, d.h. der Abweichung des Istwertes der Gierwinkelgeschwindigkeit von dem zugehörigen Sollwert ermittelt werden. Demzufolge entspricht diese Größe quasi einer Abweichung zwischen einem Istwert für die Gierwinkelbeschleunigung und einem Sollwert für die Gierwinkelbeschleunigung. Diese Größe kann auch direkt als Abweichung der in der jeweiligen Fahrsituation vorliegenden Gierwinkelbeschleunigung von einem zugehörigen Sollwert ermittelt werden. Der Grund, warum der Wert für den dynamischen Kraftanteil bzw. der Wert für die dynamischen Druckspitzen in Abhängigkeit dieser Größe ermittelt wird ist folgender: Das von der Schlingerbewegung des Fahrzeuggespannes herrührende Giermoment ist proportional zu der Gierbeschleunigung. Deshalb lässt sich die effektivste Kompensation der Schlingerbewegung dadurch erreichen, dass die Druckspitzen, durch deren Einspeisung die Kompensation realisiert werden soll, ebenfalls proportional zu der Gierbeschleunigung sind. Für den Fall, dass der Sollwert der Gierwinkelgeschwindigkeit den Wert Null annimmt, entspricht die Abweichung für die Gierwinkelgeschwindigkeit dem Istwert für die Gierwinkelgeschwindigkeit. Gleichzeitig entspricht die Größe, die die zeitliche Änderung der Abweichung für die Gierwinkelgeschwindigkeit beschreibt, dem Istwert der Gierwinkelbeschleunigung.

Als vorteilhaft hat sich erwiesen, dass sowohl der Basisdruck als auch die dynamischen Druckspitzen mit abnehmender Schlingerbewegung abnehmen. Die fahrerunabhängig durchgeführten Stabilisierungseingriffe werden somit an das Ausmaß der Instabilität angepasst.

Vorteilhafterweise werden ergänzend zu den Bremseneingriffen auch Motoreingriffe durchgeführt, wodurch sich eine bessere Verzögerungswirkung für das Fahrzeuggespann erzielen lässt. Vorteilhafterweise wird durch diese Motoreingriffe das vom Motor abgegebene Moment so eingestellt, dass an den Antriebsrädern des Zugfahrzeuges keine bzw. nahe bei Null liegende Umfangskräfte vorkommen. Mit anderen Worten: Die im Antriebsstrang entstehenden Reibungsverluste werden kompensiert und die Antriebsräder werden, was die Umfangskraft angeht, neutral, d.h. im Wesentlichen umfangskraftfrei gestellt. Durch letztgenannte Maßnahme wird sichergestellt, dass das Seitenführungskraftpotential in hohem Maße zur Verfügung steht. Durch das über den Triebstrang an den Antriebsrädern eingeleitete, geeignete Antriebsmoment wird eine Verbesserung bei der Kompensation der Schlingerbewegung des Fahrzeuggespannes erreicht. Mit den Motoreingriffen wird je nach Ausführung des Fahrzeugmotors beispielsweise die Stellung der Drosselklappe oder der Zündwinkel oder die Einspritzmenge beeinflusst.

Nachdem die stabilisierenden Bremseneingriffe eingeleitet wurden, wird vorteilhafterweise überprüft, ob die Instabilität des Fahrzeuggespannes abnimmt. Wird dabei festgestellt, dass das Fahrzeuggespann wieder einen stabilen Zustand erreicht hat, dann werden keine stabilisierenden Bremseneingriffe mehr erzeugt. Gleichzeitig wird das Antriebsmoment entsprechend der Vorgabe des Fahrers, die sich aus der Betätigung des Fahrpedals herleiten lässt, eingestellt. Durch diese Maßnahme wird ein komfortbetonter Übergang von der Fahrsituation, die vor Durchführung der fahrerunabhängigen Stabilisierungseingriffe vorlag zu der Fahrsituation, die nach Durchführung besagter Eingriffe vorliegt, gewährleistet. Es werden störende, eventuell ruckartige Änderungen in der Längsdynamik vermieden.

Vorteilhafterweise wird als fahrdynamische Eingangsgröße zumindest die Gierwinkelgeschwindigkeit des Zugfahrzeuges ermittelt und ausgewertet. Zur Erkennung, ob eine Schlingerbewegung vorliegt, werden vorteilhafterweise die Fahrzeuggeschwindigkeit, die Gierwinkelgeschwindigkeit und der Lenkwinkel ausgewertet. Dabei liegt eine Schlingerbewegung dann vor, wenn in einem Betriebszustand des Fahrzeuggespannes, bei dem die Fahrzeuggeschwindigkeit größer als ein zugehöriger Schwellenwert ist, die Gierwinkelgeschwindigkeit ein oszillierendes Verhalten zeigt, obwohl der Fahrer keine Lenkeingriffe vornimmt. Vorteilhafterweise ist der vorstehende Schwellenwert für die Fahrzeuggeschwindigkeit kleiner als die kritische Geschwindigkeit. Er liegt beispielsweise in einem Bereich oberhalb von 55 Stundenkilometer, vorzugsweise zwischen 55 und 60 Stundenkilometer.

Als besonders vorteilhaft hat sich folgende Vorgehensweise bzgl. der Erkennung einer vorliegenden Schlingerbewegung des Fahrzeuggespannes erwiesen: Das Vorliegen einer Schlingerbewegung des Fahrzeuggespannes wird in Abhängigkeit einer Abweichungsgröße festgestellt, in die die Abweichung des Istwertes der Gierwinkelgeschwindigkeit von einem zugehörigen Sollwert eingeht. Erreicht bzw. überschreitet diese Abweichung einen vorgegebenen Schwellenwert, so ist dies ein Indiz dafür, dass eine Schlingerbewegung des Fahrzeuggespannes vorliegt. Durch die Berücksichtigung bzw. Auswertung der Regelabweichung ist es beispielsweise möglich, eine vom Fahrer gewollte Slalomfahrt zu erkennen, bei der keine Instabilität des Fahrzeuggespannes vorliegt und somit auch keine stabilisierenden Eingriffe erforderlich sind.

Mit Hilfe des erfindungsgemäßen Verfahrens bzw. der erfindungsgemäßen Vorrichtung ist auch für einen durchschnittlichen Fahrer ein instabiles Fahrzeuggespann, d.h. ein Fahrzeuggespann, welches eine Schlingerbewegung aufweist, beherrschbar. Das erfindungsgemäße Verfahren bzw. die erfindungsgemäße Vorrichtung ermöglicht eine schnelle Gierreaktionsabschwächung. Ein weiterer Vorteil besteht darin, dass ausgehend von heutzutage bereits in Serie befindlichen Fahrdynamiksystemen - im Wesentlichen wird hierunter eine sogenannte Gierratenregelung verstanden, die für Fahrzeuge der Anmelderin unter der Bezeichnung ESP bekannt ist - keine zusätzliche Aktuatorik bzw. Sensorik benötigt wird. Darüber hinaus sind keine Änderungen am Anhänger erforderlich, d.h. am Anhänger muss keine Aktuatorik und auch keine Sensorik angebracht werden. Bereits im Betrieb befindliche Anhänger müssen nicht nachgerüstet werden.

Wird erkannt, dass für das Fahrzeuggespann eine Schlingerbewegung vorliegt oder wird für das Fahrzeug die Neigung oder Tendenz zu einer Schlingerbewegung festgestellt, dann werden stabilisierende Eingriffe vorgenommen. Hierbei handelt es sich in erster Linie um fahrerunabhängig durchgeführte Bremseneingriffe und in zweiter Linie um Motoreingriffe.

Mit Hilfe der Bremseneingriffe sollen die von der Schlingerbewegung herrührenden und auf das Fahrzeug wirkenden Giermomente abgebaut werden. Die Bremseneingriffe sind also so vorzunehmen, dass dadurch ein auf das Fahrzeug wirkendes Gegengiermoment erzeugt wird. Hierzu werden zunächst an den Vorderrädern des Fahrzeuges Bremseneingriffe dergestalt in Abhängigkeit des Wertes des erfassten, auf das Fahrzeug wirkenden Giermomentes und/oder des Wertes der erfassten Gierbeschleunigung durchgeführt, dass sie dem von der Schlingebewegung herrührenden Giermoment entgegenwirken. Dadurch wird die Energie der Schlingerbewegung, d.h. die Schwingungsenergie abgebaut, das Fahrzeuggespann stabilisiert sich und fährt wieder stabil.

Das Ausführungsbeispiel wird anhand der Zeichnung näher beschrieben. Dabei zeigen:
- Fig. 1: zwei Situationsaufnahmen eines instabilen Fahrzeuggespannes, anhand derer die prinzipielle Vorgehensweise des erfindungsgemäßen Verfahren erläutert wird,
- Fig. 2: in Form eines Diagramms Signalverläufe verschiedener Größen, die im Zusammenhang mit dem erfindungsgemäßen Verfahren von Bedeutung sind,
- Fig. 3: in Form einer Funktionsblockdarstellung die dem erfindungsgemäßen Verfahren zugrundliegende Arbeitsweise,
- Fig. 4: in Form einer Funktionsblockdarstellung die Funktionsweise einer bei dem erfindungsgemäßen Verfahren verwendeten Erkennungslogik,
- Fig. 5: aufgeteilt in die Teilfiguren 5a, 5b, 5c und 5d zeigt diese Figur in Form von Funktionsblockdarstellungen die Ermittlung von in der Erkennungslogik verarbeiteten Größen,
- Fig. 6: in Form einer Funktionsblockdarstellung den Aufbau einer bei dem erfindungsgemäßen Verfahren verwendeten Eingriffslogik,
- Fig. 7: aufgeteilt in die Teilfiguren 7a und 7b zeigt diese Figur in Form von Funktionsblockdarstellungen die Teilkomponenten der Eingriffslogik, mit denen Ansteuersignal zur Durchführung von Bremsen- und Motoreingriffen ermittelt werden,
- Fig. 8: aufgeteilt in die Teilfiguren 8a, 8b und 8c zeigt diese Figur in Form von Funktionsblockdarstellungen die Vorgehensweise bei der Ermittlung der Ansteuersignale zur Durchführung der Bremseneingriffe,
- Fig. 9: in Form eines Blockschaltbildes zum einen eine schematische Darstellung der erfindungsgemäßen Vorrichtung und zum anderen die wesentlichen Schritte des in der erfindungsgemäßen Vorrichtung ablaufenden erfindungsgemäßen Verfahrens.

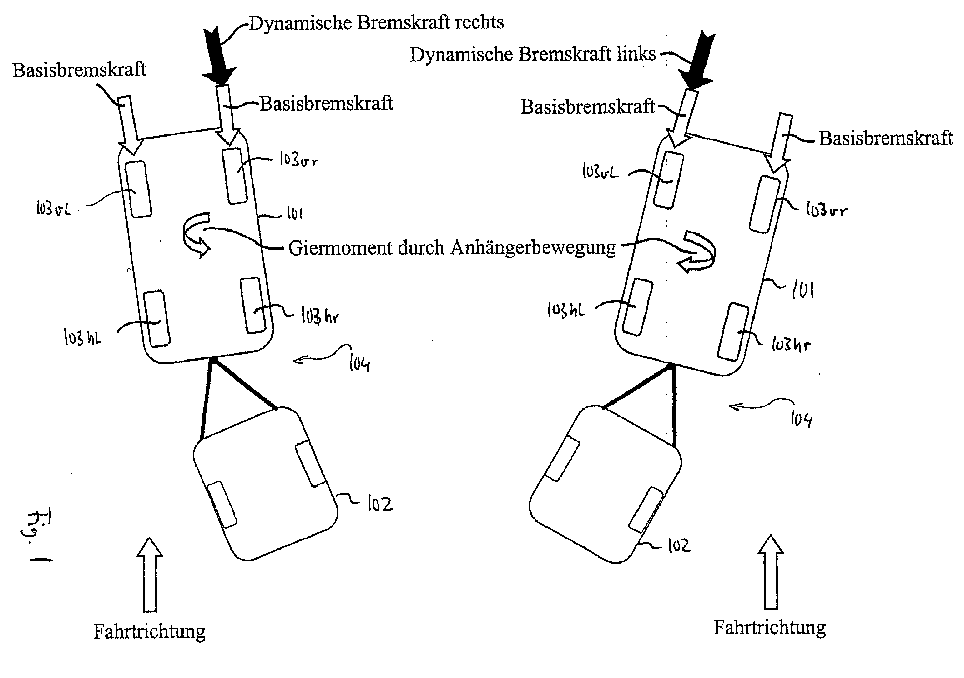

In Figur 1 ist die prinzipielle Vorgehensweise für die gemäß dem erfindungsgemäßen Verfahren an den Vorderrädern durchgeführten Bremseneingriffe dargestellt. In der linken Darstellung schwingt der Anhänger 102 nach rechts, was dazu führt, dass das Zugfahrzeug 101 eine nach links gerichtete Drehung um seine Hochachse ausführt, was durch den nach links gerichteten gebogenen Pfeil angedeutet wird. Aufgrund der erkannten Schlingerbewegung des Fahrzeuggespannes 104 wird an beiden Vorderrädern 103vl, 103vr des Zugfahrzeuges eine Basisbremskraft eingespeist. Zusätzlich wird am rechten Vorderrad 103vr eine dynamische Bremskraft eingespeist, die zu einem nach rechts gerichteten, auf das Zugfahrzeug 101 wirkenden Giermoment führt. Dieses durch die dynamische Bremskraft hervorgerufene Giermoment wirkt dem durch die Schlingerbewegung hervorgerufenen Giermoment entgegen und stabilisiert somit das Fahrzeuggespann 104.

In der rechten Darstellung schwingt der Anhänger 102 nach links, was dazu führt, dass das Zugfahrzeug 101 eine nach rechts gerichtete Drehung um seine Hochachse ausführt, was durch den nach rechts gerichteten gebogenen Pfeil angedeutet wird. Aufgrund der erkannten Schlingerbewegung des Fahrzeuggespannes 104 wird an beiden Vorderrädern 103vl, 103vr des Zugfahrzeuges eine Basisbremskraft eingespeist. Zusätzlich wird am linken Vorderrad 103vl eine dynamische Bremskraft eingespeist, die zu einem nach links gerichteten, auf das Zugfahrzeug 101 wirkenden Giermoment führt. Dieses durch die dynamische Bremskraft hervorgerufene Giermoment wirkt dem durch die Schlingerbewegung hervorgerufenen Giermoment entgegen und stabilisiert somit das Fahrzeuggespann 104.

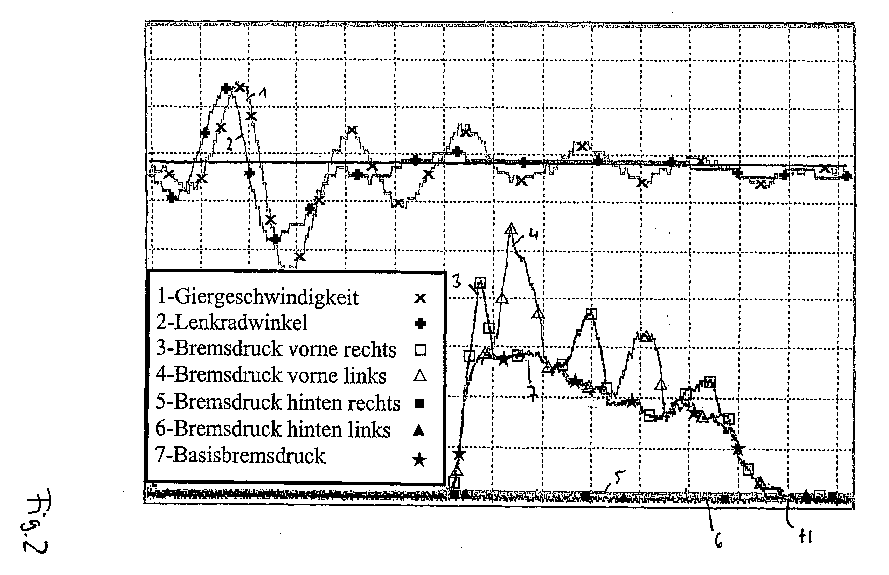

Diese Vorgehensweise ist auch in dem Diagramm der Figur 2 dargestellt. Im oberen Teil dieses Diagramms sind die Signalverläufe für die Giergeschwindigkeit und den Lenkwinkel dargestellt. Im unteren Teil dieses Diagramms sind die Signalverläufe für die an den einzelnen Rädern 103vl, 103vr, 103hl, 103hr des Zugfahrzeuges eingestellten Bremsdrücke sowie der Signalverlauf des an den Vorderrädern 103vl, 103vr gemeinsam eingespeisten Basisbremsdruckes dargestellt. Wie den Signalverläufen der für die beiden Vorderräder 103vl, 103vr eingespeisten Bremsdrücke zu entnehmen ist, setzt sich der für die Vorderräder 103vl, 103vr jeweils eingespeiste Bremsdruck aus einem Basisbremsdruck und dynamischen Druckspitzen zusammen.

Im oberen Teil des Diagramms ist folgender Sachverhalt bzw. folgende Fahrsituation dargestellt: Der Fahrer erzeugt durch entsprechende Lenkradbewegungen und somit Lenkbewegungen - im vorliegenden Fall handelt es sich um einen doppelten Lenksprung - eine Schlingerbewegung des Fahrzeuggespannes 104. In der dargestellten Fahrsituation geht somit die Schlingerbewegung des Fahrzeuggespannes 104 auf die vom Fahrer initiierten Lenkbewegungen zurück. Verlauf 2 zeigt diese Lenkbewegungen. Die Schlingerbewegung des Fahrzeuggespannes 104 zeigt sich in einem oszillierenden Verhalten des mit Hilfe eines Gierwinkelgeschwindigkeitssensors erfassten Signalsverlaufs der Gierwinkelgeschwindigkeit. Dieser Signalverlauf ist als Verlauf 1 dargestellt. Dabei gilt folgende Zuordnung: Ein positiver Wert der Gierwinkelgeschwindigkeit bedeutet eine Auslenkung des Anhängers 102 nach rechts und somit gleichzeitig eine Auslenkung des Zugfahrzeuges 101 nach links. Ein negativer Wert der Gierwinkelgeschwindigkeit bedeutet eine Auslenkung des Anhängers 102 nach links und somit gleichzeitig eine Auslenkung des Zugfahrzeuges 101 nach rechts.

Die vorstehend beschriebene Art der Anregung einer Schlingerbewegung soll keine einschränkende Wirkung auf das erfindungsgemäße Verfahren haben. Selbstverständlich, und das war die eigentliche Motivation für die Realisierung des erfindungsgemäßen Verfahrens, lassen sich mit dem erfindungsgemäßen Verfahren von außen, d.h. fahrerunabhängig angeregte Schlingerbewegungen eines Fahrzeuggespannes 104 beseitigen.

Im unteren Teil des Diagramms sind die aufgrund der erkannten Schlingerbewegung des Fahrzeuggespannes 104 mit Hilfe des erfindungsgemäßen Verfahrens durchgeführten Bremseneingriffe dargestellt. Zunächst erkennt man, dass eine gewisse Zeitspanne zwischen dem Auftreten der oszillierenden Gierwinkelgeschwindigkeit und der Druckeinspeisung vergeht. Dies rührt daher, dass zunächst die Schlingerbewegung mit Hilfe einer entsprechenden Auswertung, auf die weiter unten noch ausführlich eingegangen wird, erkannt werden muss. Ferner erkennt man anhand der Verläufe 5 und 6, dass an den beiden Hinterrädern 103hl, 103hr kein Bremsdruck eingespeist wird. Wie vorstehend bereits ausgeführt, werden an den beiden Vorderrädern 103vl, 103vr zum einen ein Basisdruck, der zu der vorstehend erwähnten Basisbremskraft führt, und zum anderen radindividuelle Druckspitzen, die zu den vorstehend genannten dynamischen Bremskräften führen, eingespeist. Der Basisdruck ist durch den Verlauf 7 dargestellt. Die Druckspitzen sind den Verläufen 3 und 4 zu entnehmen. Wie man anhand des in Figur 2 dargestellten Diagramms erkennt, wird bei einer Auslenkung des Anhängers 102 nach rechts und somit einer Auslenkung des Zugfahrzeuges 101 nach links, eine Druckspitze am rechten Vorderrad 103vr eingespeist. Entsprechend wird bei einer Auslenkung des Anhängers 102 nach links und somit einer Auslenkung des Zugfahrzeuges 101 nach rechts, eine Druckspitze am linken Vorderrad 103vl eingespeist.

Der Wert des einzuspeisenden Basisdruckes wird in Abhängigkeit einer für die Gierwinkelgeschwindigkeit vorliegenden Abweichung ermittelt. Diese Abweichung ergibt sich aus der Differenz des mit Hilfe eines Gierwinkelgeschwindigkeitssensors ermittelten Istwertes für die Gierwinkelgeschwindigkeit und einem mit Hilfe eines mathematischen Modells, im vorliegenden Fall eines Fahrzeugmodells, ermittelten Sollwert für die Gierwinkelgeschwindigkeit.

Die Werte für die einzuspeisenden Druckspitzen werden in Abhängigkeit eines Wertes bzw. einer Größe ermittelt, die die zeitliche Änderung der für die Gierwinkelgeschwindigkeit vorliegenden Abweichung beschreibt. Diese Größe kann beispielsweise als zeitliche Ableitung der für die Gierwinkelgeschwindigkeit vorliegenden Regelabweichung, d.h. der Abweichung des Istwertes der Gierwinkelgeschwindigkeit von dem zugehörigen Sollwert ermittelt werden. Diese Größe kann auch direkt als Abweichung der in der jeweiligen Fahrsituation vorliegenden Gierwinkelbeschleunigung von einem zugehörigen Sollwert ermittelt werden, wobei der Istwert von dem Sollwert subtrahiert wird. Aufgrund des geringeren Aufwandes ist die erste Alternative vorzuziehen.

Die auf den an den Vorderrädern 103vl, 103vr eingespeisten Basisbremsdruck zurückgehende Basisbremskraft bewirkt eine Abbremsung des Fahrzeuggespannes 104. Dadurch wird die Geschwindigkeit des Fahrzeuggespannes 104 auf einen Wert reduziert, der kleiner als die eingangs genannte kritische Geschwindigkeit ist.

Die durch die Druckspitzen an den Vorderrädern 103v, 103vr erzeugten Bremskräfte führen zum einen ebenfalls zu einer Abbremsung des Fahrzeuggespannes 104. Zum anderen wird durch die oszillierende Einspeisung der Druckspitzen ein sogenanntes Gegengiermoment eingeprägt, welches zu dem von der Schlingerbewegung herrührenden Giermoment gegenphasig bzw. entgegengesetzt ist. Durch dieses Gegengiermoment wird die Schlingerbewegung des Fahrzeuggespannes 104 schnellstens abgebaut. Das Fahrzeuggespann 104 wird stabilisiert.

Nachdem die stabilisierenden Bremseneingriffe eingeleitet wurden, wird überprüft, ob die Instabilität des Fahrzeuggespannes 104, d.h. die Schlingerbewegung des Fahrzeuggespannes 104 abnimmt. Wird dabei festgestellt, dass wieder ein stabiler Zustand des Fahrzeuggespannes 104 erreicht ist, dann werden keine Bremseneingriffe mehr zur Erzeugung des Basisbremsdruckes und der Druckspitzen erzeugt. Gleichzeitig wird wieder das Antriebsmoment entsprechend der Vorgabe des Fahrers, die sich aus der von ihm vorgenommenen Betätigung des Fahrpedals herleiten lässt, eingestellt.

Vorstehend beschriebene Vorgehensweise für die Bremseneingriffe ist auch dem Diagramm der Figur 2 zu entnehmen. Ab dem Zeitpunkt t1 weist der Signalverlauf der Gierwinkelgeschwindigkeit nur noch eine sehr geringe Amplitude auf, weswegen ab diesem Zeitpunkt keine Bremseneingriffe mehr vorgenommen werden. Wie man ferner diesem Diagramm entnehmen kann, nehmen sowohl der Basisbremsdruck als auch die Druckspitzen generell mit abnehmender Schlingerbewegung ab. Die Geschwindigkeit des Fahrzeuggespannes liegt unterhalb der kritischen Geschwindigkeit.

Bei der in dem Diagramm der Figur 2 dargestellten Vorgehensweise bzw. bei der zugrundeliegenden Fahrsituation werden lediglich an den Vorderrädern 103vl, 103vr Bremseneingriffe durchgeführt. D.h. allein durch die für die Vorderräder 103vl, 103vr des Zugfahrzeuges 101 veranlassten Bremseneingriffe wird ein der Schlingerbewegung des Fahrzeuggespannes 104 entgegenwirkendes Giermoment erzeugt und somit das Fahrzeuggespann 104 stabilisiert. Die betrachtete Fahrsituation soll keinem Betriebszustand des Fahrzeuggespannes 104 entsprechen, bei dem zusätzliche Bremseneingriffe für die Hinterräder 103hl, 103hr zugelassen oder veranlasst werden. Nähere Ausführungen bzgl. Bremseneingriffe an den Hinterädern 103hl, 103hr bzw. zu den entsprechenden Betriebszuständen des Fahrzeuggespannes 104 folgen weiter unten.

Wie bereits erwähnt, können ergänzend zu den Bremseneingriffen auch Motoreingriffe durchgeführt werden. Hierzu wird beispielsweise bei einem Ottomotor die Drosselklappe so eingestellt, dass an den Antriebsrädern ein Nullmoment erzeugt wird. Für den Fall dass es sich um ein Zugfahrzeug mit Hinterradantrieb handelt, sind die beiden Hinterräder 103hl, 103hr die Antriebsräder. Der dabei eingestellte Drosselklappenwinkel beträgt zwischen 6° und 10°. Mit anderen Worten: Durch die Motoreingriffe wird die Drosselklappe so eingestellt, dass an den Antriebsrädern keine bzw. nahe bei Null liegende Umfangskräfte vorkommen. D.h. die Drosselklappe wird so eingestellt, dass die im Antriebsstrang entstehenden Reibungsverluste kompensiert werden und die Antriebsräder, was die Umfangskraft angeht, neutral gestellt werden.

Im Zusammenhang mit Figur 2 wurde ausgeführt, dass allein durch die für die Vorderräder 103vl, 103vr des Zugfahrzeuges 101 veranlassten Bremseneingriffe ein der Schlingerbewegung des Fahrzeuggespannes 104 entgegenwirkendes Giermoment erzeugt wird, wodurch das Fahrzeuggespann 104 stabilisiert wird. Zusätzlich zu diesen Bremseneingriffen an den Vorderrädern 103vl, 103vr können Bremseneingriffe an den Hinterrädern 103hl, 103hr zugelassen oder veranlasst werden. Auf die Muster, nach denen die fahrerunabhängigen stabilisierenden Bremseneingriffe, sowohl für die Vorderräder 103vl, 103vr als auch für die Hinterräder 103hl, 103hr durchgeführt werden, wird nachfolgend eingegangen.

Für den Fall, dass keine Bremsung durch den Fahrer vorliegt, werden die Vorderräder 103vl, 103vr gebremst. Hierzu wird für beide Vorderräder 103vl, 103vr der Basisdruck, dessen Wert in Abhängigkeit der Abweichung des Istwertes der Gierwinkelgeschwindigkeit von dem Sollwert der Gierwinkelgeschwindigkeit ermittelt wird, eingespeist. Zusätzlich werden die Vorderräder 103vl, 103vr jeweils mit den Druckspitzen beaufschlagt, deren Wert jeweils in Abhängigkeit der Abweichung der Gierbeschleunigung ermittelt wird. In solch einem Betriebszustand - es liegt keine Bremsung durch den Fahrer vor - wird versucht, durch ausschließlich an den Vorderrädern 103vl, 103vr durchgeführte Bremseneingriffe das Fahrzeuggespann 104 zu stabilisieren. Sollte allerdings die Fahrbahnbeschaffenheit derart sein, dass ein niedriger Fahrbahnreibwert vorliegt, beispielsweise aufgrund von Schnee oder ähnlichem, was dazu führt, dass die zur Stabilisierung des Fahrzeuggespannes 104 erforderliche Bremskraft an den Vorderrädern 103vl, 103vr allein nicht aufgebaut werden kann, dann werden in solch einer Situation zusätzlich auch die Hinterräder 103hl, 103hr mitgebremst. Dabei kann es zu einer Umverteilung von Bremsdruck von den Vorderrädern 103vl, 103vr weg, hin zu den Hinterrädern 103hl, 103hr kommen. Dass eine Bremsung auf einer Fahrbahn mit niedrigem Reibwert vorliegt, kann beispielsweise durch Auswertung des ABS-Flags erkannt werden. Mit dem ABS-Flag zeigt ein Blockierschutzregler an, dass zumindest für ein Fahrzeugrad Bremseneingriffe vorgenommen werden, um ein Blockieren dieses Rades zu vermeiden. Prinzipiell kann zur Erkennung, ob sich das Fahrzeug auf einer Fahrbahn mit niedrigem Reibwert befindet, auch eine den Reibwert beschreibende Größe ausgewertet werden. Solch eine Größe liegt beispielsweise in einem Fahrdynamiksystem, mit die Gierrate eines Fahrzeuges geregelt wird, vor.

Für den Fall, dass während eines vom Fahrer eingeleiteten Bremsvorganges eine Schlingerbewegung des Fahrzeuggespannes 104 auftritt, wird das Fahrzeuggespann 104 wie folgt durch Bremseneingriffe stabilisiert: Zunächst wird die Fahrzeugverzögerung ermittelt, die sich aufgrund des vom Fahrer eingeleiteten Bremsvorganges einstellt. Liegt diese Fahrzeugverzögerung unterhalb eines vorgegebenen Schwellenwertes, was bedeutet, dass vom Fahrer ein Bremsvorgang mit einer niedrigen Verzögerung eingeleitet wurde, dann wird der an den Hinterrädern 103hl, 103hr aufgrund des vorliegenden Bremsvorganges eingestellte Bremsdruck zumindest teilweise abgebaut. Gleichzeitig wird an den Vorderrädern 103vl, 103vr Bremsdruck dergestalt aufgebaut, dass zum einen in beide Vorderräder 103vl, 103vr der Basisdruck und individuell in das jeweilige Vorderrad eine Druckspitze eingespeist wird. Auch in diesem Fall kann, wenn es sich um eine Bremsung auf einer Fahrbahn mit niedrigem Reibwert handelt, eine Umverteilung von Bremsdruck von den Vorderrädern 103vl, 103vr weg, hin zu den Hinterrädern 103hl, 103hr vorgenommen werden.

Liegt dagegen die Fahrzeugverzögerung oberhalb des vorgegebenen Schwellenwertes, was bedeutet, dass vom Fahrer ein Bremsvorgang mit einer hohen Verzögerung eingeleitet wurde, dann wird der an den Hinterrädern 103hl, 103hr eingestellte Bremsdruck belassen. An den Vorderrädern 103vl, 103vr wird der Bremsdruck zur Erzeugung eines dynamischen Giermomentes moduliert, welches zu dem Giermoment, das von der Schlingerbewegung des Fahrzeuggespannes 104 herrührt, gegenphasig ist. Sollte an einem oder beiden Vorderrädern 103vl, 103vr während solch eines Bremsvorganges ein Eingriff eines Blockierschutzreglers (ABS-Regler) erfolgen, dann wird an der Hinterachse zusätzlich Bremsdruck eingeleitet. Dadurch ist es für den Blockierschutzregler möglich, den Bremsdruck an den Vorderrädern 103vl, 103vr in modulierender Weise soweit abzubauen, dass ein Blockieren eines oder beider Vorderräder 103vl, 103vr vermieden wird, ohne dass dabei die auf das Fahrzeuggespann 104 wirkende Verzögerung reduziert wird. Die Druckeinleitung an der Hinterachse kann sogar so weit gehen, dass die Hinterräder 103hl, 103hr an ihre Blockiergrenze gebracht werden.

Alternativ zu der Auswertung der Fahrzeugverzögerung kann auch durch Auswertung des Zustandes der Vorderräder 103vl, 103vr festgestellt werden, ob ein Bremsvorgang mit einer niedrigen oder hohen Verzögerung vorliegt. Hierzu kann beispielsweise der Wert des in die Radbremszylinder der Vorderräder 103vl, 103vr jeweils eingespeisten Bremsdruckes oder aber die Ansteuerung der Einlass- und Auslassventile der Vorderräder 103vl, 103vr ausgewertet werden. Alternativ kann auch der an den Vorderrädern 103vl, 103vr auftretende Bremsschlupf ausgewertet werden.

Zusammenfassend kann bzgl. der Bremseneingriffe festgehalten werden: In erster Linie werden an den Vorderrädern 103vl, 103vr stabilisierende Bremseneingriffe durchgeführt. Durch Auswertung eines vorgegebenen Kriteriums bzw. bei vorliegen vorgegebener Betriebszustände des Fahrzeuggespannes 104 können zusätzlich zu den für die Vorderräder 103vl, 103vr durchgeführten Bremseneingriffe auch an den Hinterädern 103hl, 103hr Bremseneingriffe zur Erzeugung einer Bremskraft vorgenommen werden.

Die Sensierung einer Schlingerbewegung des Fahrzeuggespannes 104 erfolgt mit Hilfe der Sensorik, die im Zugfahrzeug 101 aufgrund des Fahrdynamiksystems, mit dem das Zugfahrzeug 101 ausgestattet ist, vorhanden ist. Bei diesem Fahrdynamiksystem soll es sich um eine sogenannte Gierratenregelung (ESP) handeln. Demzufolge wird zur Erkennung, ob eine Schlingerbewegung vorliegt, zumindest die Fahrzeuggeschwindigkeit, die Gierwinkelgeschwindigkeit und der Lenkwinkel ausgewertet.

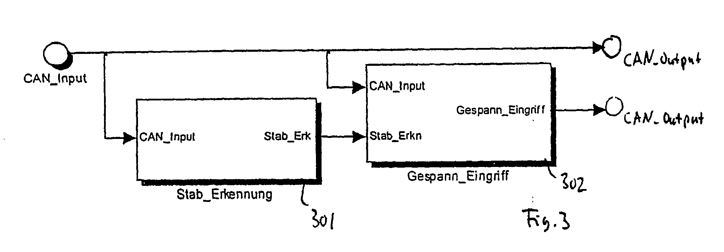

Das erfindungsgemäße Verfahren setzt sich, wie in Figur 3 dargestellt, aus zwei Hauptteilen zusammen. Zum einen handelt es sich um eine Erkennungslogik 301, mit der eine Schlingerbewegung des Fahrzeuggespannes 104 erkannt wird. Zum anderen handelt es sich um eine Eingriffslogik 302, mit der für den Fall, dass eine Schlingerbewegung des Fahrzeuggespannes 104 vorliegt, stabilisierende Bremseneingriffe und/oder Motoreingriffe und/oder Lenkungseingriffe durchgeführt werden. Die in der Erkennungslogik 301 zur Verarbeitung benötigten Größen werden dieser über einen im Zugfahrzeug 101 vorhandenen CAN-Bus zur Verfügung gestellt. Die in der Eingriffslogik 302 benötigten Größen werden dieser zum einen ausgehend von der Erkennungslogik 301 und zum anderen ebenfalls über den CAN-Bus zur Verfügung gestellt. Sowohl die von der Erkennungslogik 301 als auch die von der Eingriffslogik 302 erzeugten Größen werden auf den CAN-Bus ausgegeben. Die Ausgabe erfolgt jeweils über eine in der jeweiligen Logik enthaltenen, geeigneten Schnittestelle.

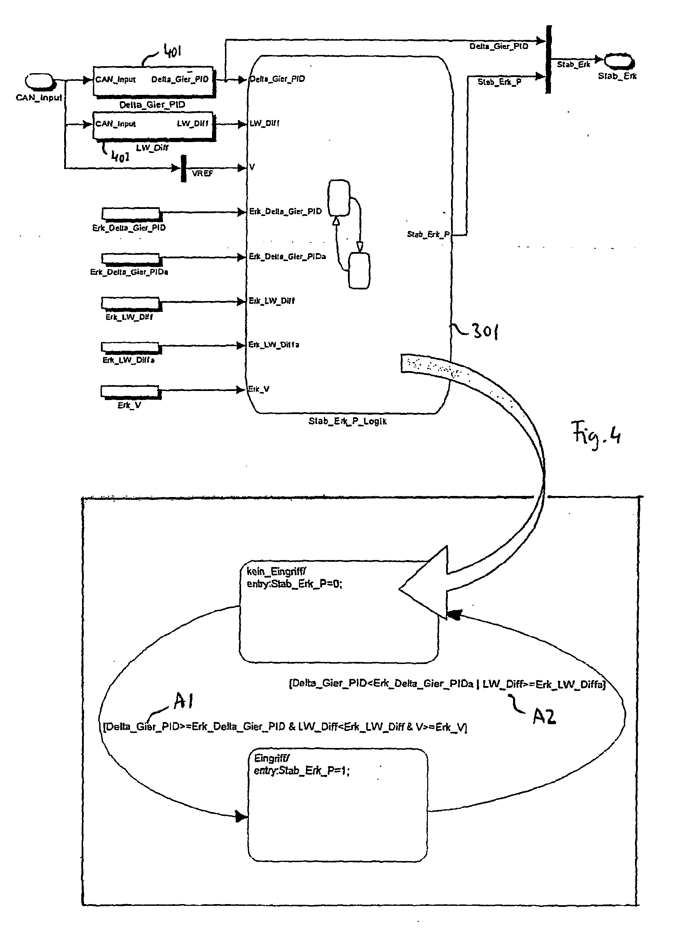

Nachfolgend wird die Funktionsweise der Erkennungslogik 301 anhand von Figur 4 beschrieben. Mit Hilfe der Erkennungslogik 301 wird festgestellt, ob eine Schlingerbewegung des Fahrzeuggespannes 104 vorliegt, d.h. ob eine Schwingbewegung des Anhängers 102 des Fahrzeuggespannes 104 vorliegt. Hierzu werden verschiedene Fahrzeuggrößen ausgewertet. Im Einzelnen wird die Gierwinkelgeschwindigkeit, der Lenkwinkel und die Fahrzeuggeschwindigkeit ausgewertet.

Das Kriterium, mit dem das Vorliegen einer Schlingerbewegung des Fahrzeuggespannes 104 und somit das Vorliegen einer Schwingbewegung des Anhängers 102 erkannt werden kann, lässt sich allgemein wie folgt formulieren: Betrachtet wird ein Betriebszustand des Fahrzeuggespannes 104, bei dem die in diesem Betriebszustand vorliegende Fahrzeuggeschwindigkeit größer gleich einem zugehörigen Schwellenwert ist. Dieser Schwellenwert ist dabei kleiner als die kritische Geschwindigkeit. Zeigt in diesem Betriebszustand die Gierwinkelgeschwindigkeit ein oszillierendes Verhalten, obwohl der Fahrer das Lenkrad nicht betätigt und somit keine Lenkungseingriffe vornimmt, so ist dies ein Zeichen dafür, dass eine Schlingerbewegung des Fahrzeuggespannes 104 und somit eine Schwingbewegung des Anhängers 102 und somit ein instabiler Zustand des Fahrzeuggespannes 104 vorliegt. Dies bedeutet: Zur Erkennung, ob eine Schlingerbewegung eines Fahrzeuggespannes 104 vorliegt, bietet es sich an, die Fahrzeuggeschwindigkeit, die Gierwinkelgeschwindigkeit und den Lenkwinkel auszuwerten.

Aufgrund der Tatsache, dass bei einem Fahrzeuggespann 104, dessen Geschwindigkeit unterhalb der kritischen Geschwindigkeit liegt, Schlingerbewegungen zwar auftreten können, diese aber wieder von alleine abklingen, kann von vornherein davon ausgegangen werden, dass bei einem Betriebszustand, bei dem die Fahrzeuggeschwindigkeit die kritische Geschwindigkeit nicht erreicht, stabilisierende Eingriffe, wie sie gemäß dem erfindungsgemäßen Verfahren durchgeführt werden, nicht erforderlich sind. Liegt dagegen die Geschwindigkeit des Fahrzeuggespannes oberhalb der kritischen Geschwindigkeit, nehmen die Schlingerbewegungen des Fahrzeuggespannes zu, weswegen bei diesem Betriebszustand entsprechende stabilisierende Eingriffe durchgeführt werden.

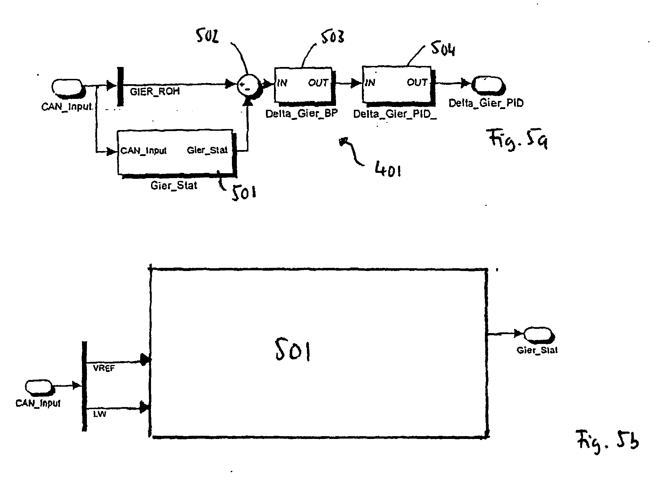

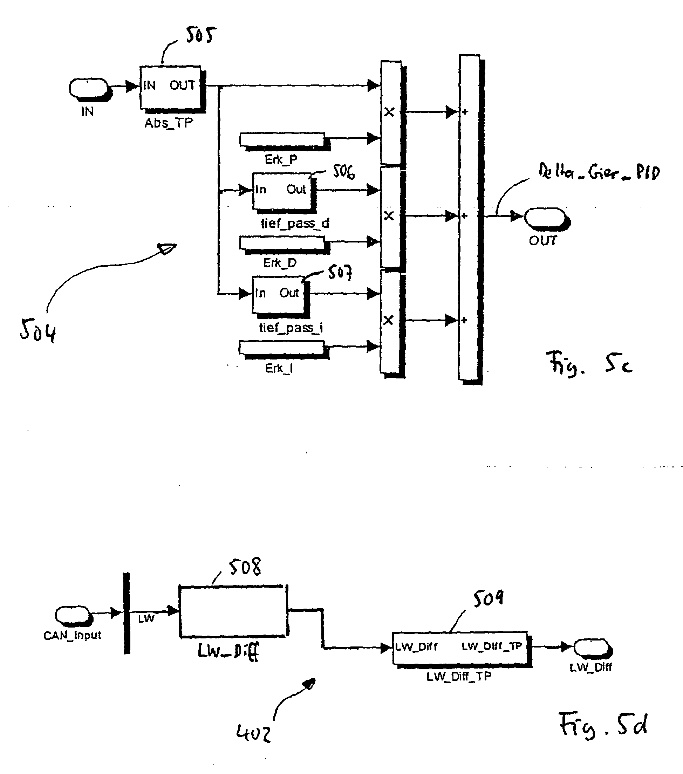

Wie Figur 4 zu entnehmen ist, werden der Erkennungslogik 301 verschiedene Größen zugeführt. Zum einen handelt es sich um die auszuwertenden Größen, die eine Größe Delta Gier PID, eine Größe LW_Diff und eine Größe v umfassen. Die Größe Delta_Gier_PID wird in Abhängigkeit der Gierwinkelgeschwindigkeit in einem Block 401, der im Zusammenhang mit Figur 5a beschrieben wird, ermittelt. Die Größe LW_Diff wird in Abhängigkeit des Lenkwinkels in einem Block 402, der im Zusammenhang mit Figur 5d beschrieben wird, ermittelt. Bei der Größe v handelt es sich um die Fahrzeuggeschwindigkeit des Fahrzeuggespannes 104, die auch als Referenzgeschwindigkeit bezeichnet wird. Zum anderen handelt es sich um die Größen Erk_Delta_Gier_PID, Erk_Delta_Gier_PIDa, Erk_LW-Diff, Erk_LW_Diffa und Erk_V. Diese Größen stellen einstellbare Parameter dar, die die Funktion von Schwellenwerten haben, und mit denen die vorstehend aufgeführten Größen Delta_Gier_PID, LW_Diff und V verglichen werden.

Wie der zweigeteilten Darstellung in Figur 4 zu entnehmen ist, werden in der Erkennungslogik 301 zwei Abfragen vorgenommen. Eine erste mit A1 bezeichnete Abfrage, mit der erkannt wird, ob eine Schlingerbewegung des Fahrzeuggespannes 104 vorliegt. Gemäß dieser ersten Abfrage liegt eine Schlingerbewegung des Fahrzeuggespannes 104 dann vor, wenn die Größe Delta_Gier_PID größer oder gleich dem Schwellenwert Erk_Delta_Gier_PID ist und wenn gleichzeitig die Größe LW_Diff kleiner als der Schwellenwert Erk_LW_Diff ist und wenn gleichzeitig die Fahrzeuggeschwindigkeit V größer oder gleich dem Schwellenwert Erk_V ist. Wird auf eine vorliegende Schlingerbewegung erkannt, dann sind stabilisierende Eingriffe erforderlich, weswegen das Flag Stab_Erk_P gesetzt wird, d.h. diesem Flag wird der Wert 1 zugewiesen.

Ferner wird eine zweite mit A2 bezeichnete Abfrage durchgeführt, mit der erkannt wird, ob die Schlingerbewegung wieder abgeklungen ist. Gemäß dieser zweiten Abfrage liegt dann keine Schlingerbewegung des Fahrzeuggespannes 104 mehr vor, wenn die Größe Delta Gier PID kleiner als der Schwellenwert Erk_Delta_Gier_PIDa ist oder wenn die Größe LW_Diff größer oder gleich dem Schwellenwert Erk_LW_Diffa ist. Wird erkannt, dass keine Schlingerbewegung mehr vorliegt, dann sind die stabilisierenden Eingriffe nicht mehr erforderlich. Aus diesem Grund wird das Flag Stab_Erk_P gelöscht, diesem Flag wird der Wert 0 zugewiesen.

Wie man den beiden Abfragen A1 und A2 entnehmen kann, werden für die beiden Größen Delta_Gier_PID und LW_Diff unterschiedliche Schwellenwerte verwendet, wodurch eine Hysteresefunktion realisiert wird.

Das Flag Stab_Erk_P wird von der Erkennungslogik 301 ausgegeben und steht somit den Komponenten, in denen dieses Flag weiterverarbeitet wird, zur Verfügung. Insbesondere steht es der Eingriffslogik 302 zur Verfügung.

Mit Hilfe der Figuren 5a, 5b, 5c und 5d wird die Ermittlung verschiedener in der Erkennungslogik 301 benötigter Größen beschrieben. In den Figuren 5a, 5b und 5c ist dargestellt, wie die Größe Delta_Gier_PID ermittelt wird.

Gemäß Figur 5a gehen in die Ermittlung der Größe Delta_Gier_PID zum einen der mit Hilfe eines Gierwinkelgeschwindigkeitssensors gemessene Istwert GIER_ROH der Gierwinkelgeschwindigkeit und zum anderen ein aus Fahrervorgaben ermittelter Sollwert Gier_Stat der Gierwinkelgeschwindigkeit ein. Der Istwert GIER_ROH wird über den CAN-Bus bereitgestellt, die Ermittlung des Sollwertes Gier_Stat erfolgt in einem Block 501. Aus diesen beiden Größen wird mittels eines Differenzbildners 502 die Differenz Delta_Gier gebildet, die einem nachgeschalteten Bandpass 503 zugeführt wird.

Wie der Darstellung des Blockes 501 in Figur 5b zu entnehmen ist, wird der Sollwert Gier_Stat in Abhängigkeit des vom Fahrer eingestellten Lenkwinkels LW und der vom Fahrer eingestellten Fahrzeuggeschwindigkeit VREF mit Hilfe eines mathematischen Modells ermittelt. Als mathematisches Modell kann beispielsweise die aus der Literatur bekannte Ackermann-Beziehung zum Einsatz kommen.

Wie der Figur 5a zu entnehmen ist, wird die Differenz Delta_Gier einem Bandpass 503 zugeführt, der lediglich Signale durchlässt, die in einem Frequenzbereich von 0,5 bis 2 Hz liegen. Dieser Frequenzbereich entspricht dem Frequenzbereich, der für die Schlingerbewegung eines Fahrzeuggespannes 104 typisch ist; er wird auch als Eigenfrequenzbereich des Fahrzeuggespannes 104 bezeichnet. Die Differenz Delta_Gier, bei der es sich von der Bedeutung her um die Regelabweichung des im Zugfahrzeug 101 angeordneten Fahrdynamiksystems zur Regelung der Gierrate (ESP) handelt, wird somit für die sich anschließende Auswertung, mit der eine eventuell vorliegende Schlingerbewegung des Fahrzeuggespannes 104 erkannt werden kann, mit Hilfe eines Bandpassfilters gefiltert. Für den Fall, dass das Fahrzeuggespann 104 schlingert, liegt somit nach der Bandpassfilterung ein sich zeitlich änderndes Signal in Form einer Schwingung vor, wobei es sich bei diesem Signal im Regelfall um keine reine Sinus- oder Kosinusschwingung handelt. Das mit Hilfe des Bandpasses 503 ermittelte Signal Delta_Gier_BP wird einem nachgeschalteten Block 504 zugeführt, dessen Funktion mit Hilfe der Figur 5c beschrieben wird.

Mit Hilfe der in Figur 5c dargestellten Einheit wird die von dem Bandpass 503 bereitgestellte Größe Delta_Gier_BP, d.h. die gefilterte Regelabweichung, zu einer Größe Delta_Gier_PID weiterverarbeitet, mit deren Hilfe eine vorliegende Schlingerbewegung des Fahrzeuggespannes 104 erkannt wird. Gleichzeitig dient diese Größe der Ermittlung des in den Vorderrädern einzuspeisenden Basisdruckes. Die Auswertung der Regelabweichung, d.h. der Abweichung des Istwertes der Gierwinkelgeschwindigkeit von dem zugehörigen Sollwert, gegenüber der alleinigen Auswertung des mit Hilfe des Gierratensensors ermittelten Signals, d.h. des Istwertes der Gierrate, hat folgenden Vorteil: Durch die Auswertung der Regelabweichung ist es beispielsweise möglich, eine vom Fahrer gewollte Slalomfahrt zu erkennen, bei der keine Instabilität des Fahrzeuggespannes vorliegt und somit auch keine stabilisierenden Eingriffe erforderlich sind.

Zunächst wird mit Hilfe eines Tiefpasses 505 der Betrag des Signals Delta_Gier_BP ermittelt. Durch Multiplikation mit einem Faktor Erk_P ergibt sich daraus ein Proportionalanteil, mit dem überprüft werden kann, wie stark die Schlingerbewegung ist. Der Proportionalanteil zeigt an, wenn nach einer auf das Fahrzeuggespann eingewirkten Störung eine Schwingung von bedeutsamer Größe vorliegt. Ferner wird das mit Hilfe des Tiefpasses 505 erzeugte Betragssignal einem Block 506 zugeführt, in welchem die zeitliche Ableitung des Betragssignals gebildet wird. Das mit dem Block 506 erzeugte Signal wird mit einem Faktor Erk_D multipliziert, wodurch sich ein Differentialanteil ergibt, mit dem überprüft werden kann, ob die Schlingerbewegung ab- oder zunimmt. Der Differentialanteil zeigt auch Instabilitäten an, die auf kurzfristige, auf das Fahrzeuggespann einwirkende Störungen, wie beispielsweise Windböen, zurückgehen. Alternativ kann auch vorgesehen sein, das mit Hilfe des Tiefpasses 505 erzeugte Betragssignal einem Block 507 zuzuführen, in welchem eine Integration des Betragssignals erfolgt. Durch Multiplikation des in dem Block 507 ermittelten Signals mit einem Faktor Erk_I ergibt sich ein Integralanteil, der folgende Bedeutung hat: Beispielsweise kann es bei einer Fahrt des Fahrzeuggespannes mit einer Geschwindigkeit, die nahe bei der kritischen Geschwindigkeit liegt, zu einem kontinuierlich, leichten Schlingern des Fahrzeuggespannes kommen. Solch ein Schlingerverhalten wird mit Hilfe des Integralanteils erfasst. Überschreitet der Integralanteil einen vorgegeben Wert, so ist dies ein Zeichen dafür, dass dieser leichte Schlingervorgang schon längere Zeit vorliegt, weswegen stabilisierende Eingriffe zu dessen Beseitigung erforderlich sind und auch durchgeführt werden. Die Berücksichtigung des Integralanteils ist bei dem vorliegenden erfindungsgemäßen Verfahren nicht zwingend vorgesehen und somit optional.

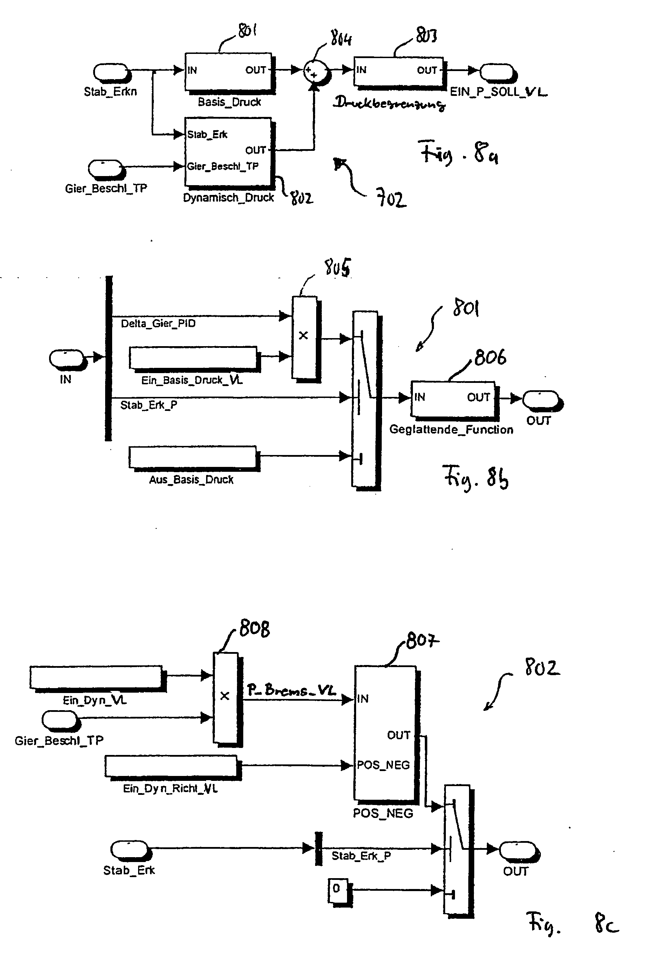

Der Proportionalanteil und der Differentialanteil und sofern vorhanden auch der Integralanteil werden anschließend zu dem Signal Delta_Gier_PID zusammengefasst. Ausgehend von dem Block 504 wird das Signal Delta_Gier_PID zur weiteren Verarbeitung der Erkennungslogik 301 und einer in Figur 8b enthaltenen Komponente 805 zugeführt.

In Figur 5d ist die Ermittlung der Größe LW_Diff dargestellt. Die Größe LW_Diff wird in der Erkennungslogik 301 bei der Ermittlung, ob eine Schlingerbewegung des Fahrzeuggespannes 104 vorliegt, mit ausgewertet, da eine Auswertung der Gierwinkelgeschwindigkeit allein oder einer in Abhängigkeit der Gierwinkelgeschwindigkeit ermittelten Größe, zu ungenau ist. Würde der Lenkwinkel nicht mit ausgewertet werden, so könnte nicht zwischen einer auf eine Schlingerbewegung des Fahrzeuggespannes 104 zurückgehenden Instabilität und einer vom Fahrer, durch Lenkungseingriffe gezielt eingeleiteten Slalomfahrt unterschieden werden. Gemäß der Darstellung in Figur 5d wird der Lenkwinkel dergestalt ausgewertet und somit die Größe LW_Diff dergestalt ermittelt, dass zunächst in einem Block 508 die zeitliche Ableitung des Lenkwinkels gebildet wird, und diese anschließend in einem Block 509 tiefpassgefiltert wird. Durch diese Maßnahmen werden kleine Lenkbewegungen des Fahrers, die unbedeutend sind, ausgeblendet.

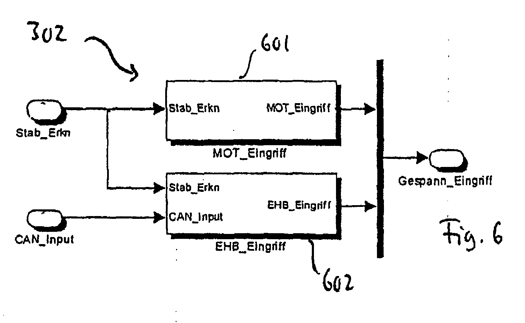

Der Darstellung in Figur 6 ist der Aufbau der Eingriffslogik 302 zu entnehmen. Wie zu erkennen ist, werden zur Stabilisierung des Fahrzeuggespannes 104 zwei Arten von Eingriffen durchgeführt. Zum einen und in erster Linie Bremseingriffe, die mit Hilfe eines Blockes 602 veranlasst werden. Zum anderen und unterstützend, sofern dies erforderlich ist, Motoreingriffe, die mit Hilfe eines Blockes 601 veranlasst werden.

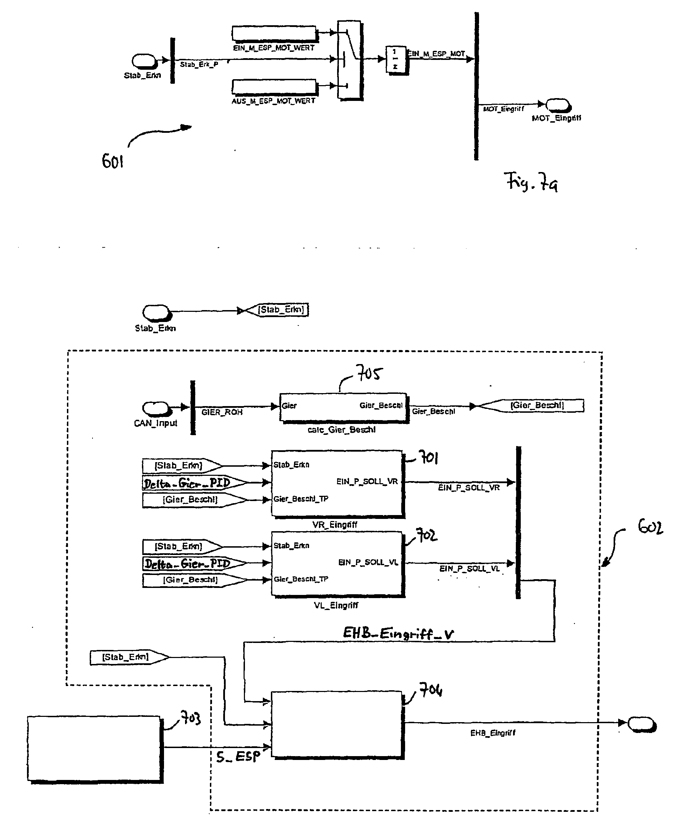

In Figur 7a ist die Realisierung des Blockes 601 und somit die Vorgehensweise bei der Ermittlung der Ansteuersignale zur Durchführung der Motoreingriffe dargestellt. Die dargestellte Schaltung hat folgende Funktion: Für den Fall, dass das Flag Stab_Erk_P den Wert 1 annimmt, was gleichbedeutend damit ist, dass eine Schlingerbewegung des Fahrzeuggespannes 104 vorliegt, nimmt das Signal EIN_M_ESP_MOT, dessen Wert bis zu diesem Zeitpunkt dem vom Fahrer vorgegebenen Motormoment entspricht, den Wert EIN_M_ESP_MOT_WERT an. Dadurch wird eine Reduzierung des Motormomentes dergestalt erreicht, dass an den Antriebsrädern des Zugfahrzeuges 101 keine bzw. nahe bei Null liegende Umfangskräfte vorkommen. Der Wert EIN_M_ESP_MOT_WERT wird beispielsweise in Abhängigkeit des Wirkungsgrades des Triebstranges und/oder des eingelegten Ganges und/oder des Schleppmomentes des Zugfahrzeuges ermittelt. Für den Fall, dass das Flag Stab_Erk_P den Wert 0 annimmt, was gleichbedeutend damit ist, dass im betrachteten Fall keine Schlingerbewegung mehr vorliegt, nimmt das Signal EIN_M_ESP_MOT den Wert AUS_M_ESP_MOT_WERT an. Dadurch wird das Antriebsmoment wieder entsprechend der Vorgabe des Fahrers eingestellt. Hierbei erfolgt der Übergang mit Hilfe einer geeignet gewählten Übergangsfunktion, so dass der Übergang nicht zu einer Beeinträchtigung des Fahrer führt.

In Figur 7b ist die Realisierung des Blockes 602 und somit die Vorgehensweise bei der Ermittlung der Ansteuersignale zur Durchführung der Bremseneingriffe dargestellt. Mit Hilfe zweier Blöcke 701 und 702 lassen sich für die Vorderräder 103vl, 103vr die Ansteuersignale zur Durchführung der stabilisierenden Bremseneingriffe ermitteln, wobei folgende Zuordnung gilt: Mit Hilfe des Blockes 701 werden die Ansteuersignale für das rechte Vorderrad 103vr und mit Hilfe des Blockes 702 werden die Ansteuersignale für das linke Vorderrad 103vl ermittelt. Die Ermittlung der Ansteuersignale zur Durchführung von Bremseneingriffen an den Hinterrädern 103hl, 103hr erfolgt mit Hilfe zweier Blöcke 703 und 704.

Mit Hilfe der in Figur 7b dargestellten Blöcke 701, 702, 703 und 704 kann an den Rädern des Fahrzeuges radindividuell Bremsdruck eingespeist werden. Somit lassen sich an den Vorderrädern 103vl, 103vr der Basisdruck bzw. die Basiskraft und die Druckspitzen bzw. die dynamischen Kräfte einstellen. Außerdem lässt sich eine Verteilung der Bremsdrücke zwischen den Vorder- und den Hinterädern realisieren, wie sie in bestimmten vorgegebenen Betriebszuständen des Fahrzeuggespannes erforderlich ist.

Mit Hilfe des Blockes 705 wird die Gierbeschleunigung Gier_Beschl ermittelt. Hierzu wird das diesem Block zugeführte Signal GIER_ROH zunächst tiefpassgefiltert. Im Anschluss daran wird die zeitliche Ableitung des tiefpassgefilterten Signals gebildet und diese zeitliche Ableitung selbst ebenfalls tiefpassgefiltert. Das dabei entstehende Signal Gier_Beschl wird dann vom Block 705 ausgegeben und beispielsweise den Blöcken 701 und 702 zugeführt. Den beiden Blöcken 701 und 702 werden ferner das Flag Stab_Erk_P, welches in dem Signalverbund Stab_Erkn enthalten ist, und die Größe Delta_Gier_PID zugeführt.

Der Aufbau der beiden Blöcke 701 und 702 ist mit Hilfe der Figuren 8a, 8b und 8c weiter ausgeführt, die nachfolgend zunächst eingegangen wird. Auf die Realisierung der beiden Blöcke 703 und 704 wird daran anschließend eingegangen.

In Figur 8a ist der Aufbau des Blockes 702 dargestellt, mit dem die Ansteuerungssignale EIN_P_SOLL_VL zur Durchführung der Bremseneingriffe für das linke Vorderrad 103vl ermittelt werden. Der Aufbau des dem rechten Vorderrad 103vr zugeordneten Blockes 701 ist identisch. Entsprechendes gilt für die Darstellungen in den Figuren 8b und 8c.

Der Darstellung in Figur 8a ist zu entnehmen, dass die Ansteuersignale aus zwei Anteilen bestehen. Einem ersten Anteil zur Einstellung des Basisdruckes bzw. der Basiskraft, der in einem Block 801 ermittelt wird und einem zweiten Anteil zur Einstellung der Druckspitzen bzw. der dynamischen Kräfte, der in einem Block 802 ermittelt wird. Diese beiden Anteile werden in einem Summierer 804 aufaddiert. Mit Hilfe eines Blockes 803 wird dieses Summensignal begrenzt. Durch diese Maßnahme wird sichergestellt, dass der an den Vorderrädern 103vl, 103vr einzustellende Bremsdruck einen für die jeweilige Bremsanlage vorgegebenen Wert nicht übersteigt. Das begrenzte Summensignal wird als Ansteuersignal EIN_P_SOLL_VL ausgegeben.

In Figur 8b ist der Aufbau des Blockes 801 und somit die Vorgehensweise bei der Ermittlung des Anteils des Ansteuersignals dargestellt, mit dem der Basisdruck eingestellt wird. Wie der Darstellung in Figur 8b zu entnehmen ist, ist dieser Anteil proportional zu der Größe Delta_Gier_PID. D.h. dieser Anteil wird in Abhängigkeit einer für die Gierwinkelgeschwindigkeit vorliegenden Abweichung ermittelt. Die Proportionalität zu der Größe Delta_Gier_PID bewirkt, dass die Basiskraft bei einer stärkeren Schwingung, in diesem Fall ist der P-Anteil größer, zunimmt. Entsprechendes gilt auch für eine ungedämpfte Schwingung.

Wenn das Flag Stab_Erk_P den Wert 1 aufweist und somit eine Schlingerbewegung des Fahrzeuggespannes 104 vorliegt, wird das in dem Multiplizierer 805 als Produkt der Größen Delta_Gier_PID und Ein_Basis_Druck_VL erzeugte Signal ausgegeben. Bei der Größe Ein_Basis_Druck_VL handelt es sich um einen von der Ausgestaltung der Bremsanlage abhängigen, applizierten Verstärkungsfaktor, der vorzugsweise einen konstanten Wert innerhalb des Bereiches von 70 bis 140 bar aufweist. Weist dagegen das Flag Stab_Erk_P den Wert 0 auf, so wird das Signal Aus_Basis_Druck, welches einen vorgegebenen kleinen Wert aufweist, ausgegeben, der zu keiner Einspeisung von Bremsdruck führt. Dadurch soll sichergestellt werden, dass für den Fall, dass keine Schlingerbewegung vorliegt, eine versehentliche Einspeisung von Bremsdruck unterbleibt. Mit Hilfe eines Blockes 806 wird das auszugebende Signal geglättet.

In Figur 8c ist der Aufbau des Blockes 802 und somit die Vorgehensweise bei der Ermittlung des Anteils des Ansteuersignals dargestellt, mit dem die Druckspitzen eingestellt werden. Wie der Darstellung in Figur 8c zu entnehmen ist, ist dieser Anteil zu der Größe Gier_Beschl_TP und somit der Gierbeschleunigung proportional. D.h. der Anteil des Ansteuersignals zur Erzeugung der Druckspitzen wird in Abhängigkeit der Gierbeschleunigung ermittelt. Da das von der Schlingerbewegung herrührende Giermoment der Gierbeschleunigung proportional ist, steht somit eine Information darüber zur Verfügung, wie welches Vorderrad zu bremsen ist, um ein zu der Schlingerbewegung gegenphasiges Giermoment erzeugen zu können. Die Größe Gier_Beschl_TP wird im Block 702 aus dem ihm zugeführten Signal Gier_Beschl durch Tiefpassfilterung gewonnen.

Wenn das Flag Stab_Erk_P den Wert 1 aufweist, was gleichbedeutend damit ist, dass eine Schlingerbewegung des Fahrzeuggespannes 104 vorliegt, wird der von einem Block 807 bereitgestellte Anteil des Ansteuersignals, der die Druckspitzen bewirkt, ausgegeben. Ansonsten wird der Wert 0 ausgegeben.

Mit Hilfe eines Multiplizierers 808 wird das Produkt der beiden Größen Gier-Beschl_TP und Ein_Dyn_VL ermittelt. Durch die Multiplikation der Größe Gier_Beschl_TP mit der Größe Ein_Dyn_VL, die einen Umrechnungsfaktor darstellt, wird die Größe Gier_Beschl_TP, die physikalisch einer Gierbeschleunigung entspricht, in eine Größe P_Brems_VL umgerechnet, die physikalisch einem Druck entspricht. Die Größe P_Brems_VL wird dem Block 807 zugeführt.

Mit Hilfe des Blockes 807 wird ausgehend von dem Signal P_Brems_VL ein Signal ermittelt und ausgegeben, mit dessen Hilfe am linken Vorderrad solche Bremseneingriffe durchgeführt werden, durch die - selbstverständlich in Verbindung mit entsprechenden am rechten Vorderrad durchgeführten Bremseneingriffen - ein der Schlingerbewegung entgegenwirkendes Giermoment erzeugt wird.

Wie bereits ausgeführt, entspricht das Signal Gier_Beschl_TP der Gierbeschleunigung. Im mathematischen Sinne stellt dieses Signal die zeitliche Ableitung des in Figur 2 dargestellten Verlaufes 1 der Gierwinkelgeschwindigkeit dar. Auf die Darstellung des Signalverlaufes der Gierbeschleunigung in Figur 2 wurde aus Gründen der Übersichtlichkeit verzichtet. Es handelt sich jedoch im Wesentlichen um ein um 90° versetztes, dem Signal der Gierwinkelgeschwindigkeit vorauseilendes Signal. Sowohl das Signal Gier_Beschl_TP als auch das Signal P_Brems_VL zeigen ein oszillierendes Verhalten.

Um aus dem oszillierenden Signal P_Brems_VL ein Signal generieren zu können, mit dessen Hilfe am linken Vorderrad phasenrichtige Bremseneingriffe durchgeführt werden können, ist der Block 807 als Vergleicher ausgebildet, der wie folgt arbeitet:

Im Rahmen des vorliegenden Ausführungsbeispiels soll der Block 807 nur noch die positiven Signalbestandteile des Signals P_Brems_VL ausgeben. Zu diesem Zweck wird im Block 807 das Signal P_Brems_VL mit einer Vergleichsgröße Ein_Dyn_Richt_VL verglichen. Nimmt das Signal P_Brems_VL den Wert der Vergleichsgröße Ein_Dyn_Richt_VL ein oder überschreitet es diesen Wert, dann wird der übersteigende Anteil des Signals P_Brems_VL vom Block 807 ausgegeben. Die Anteile des Signals B_Brems_VL, die den Wert der Vergleichsgröße Ein_Dyn_Richt_VL unterschreiten, werden nicht ausgegeben, statt dessen gibt der Block 807 das Signal 0 aus.

Vorzugsweise weist die Vergleichsgröße Ein_Dyn_Richt_VL den Wert 0 auf. Aufgrund der Festlegung dieses Wertes werden mit Hilfe des Blockes 807 die positiven Halbwellen des Signals P_Brems_VL ausgegeben, die negativen Halbwellen werden unterdrückt. Die Funktionsweise des Blockes 807 kann auch so beschrieben werden, dass er das Maximum der beiden Größen P_Brems_VL und Ein_Dyn_Richt_VL ausgibt.

Der für das rechte Vorderrad 103vr in dem Block 701 zum Einsatz kommende Block 802 entspricht vom Aufbau her dem in Figur 8c dargestellten, allerdings mit dem Unterschied, dass der für das rechte Vorderrad 103vr verwendete Faktor Ein_Dyn_VR negativ ist. Dadurch wird erreicht, dass für das rechte Vorderrad 103vr die in dem Signal Gier_Beschl_TP enthaltenen negativen Halbwellen für die Ermittlung des Ansteuersignals, mit dem die Druckspitzen am rechten Vorderrad 103vr erzeugt werden, berücksichtigt werden und die positiven Halbwellen ausgeblendet werden.

Zusammengefasst kann festgehalten werden: Für das linke Vorderrad 103vl werden die positiven Halbwellen und für das rechte Vorderrad 103vr werden die negativen Halbwellen des Signals Gier_Beschl_TP berücksichtigt.

Nachdem die Arbeitsweise der beiden Blöcke 701 und 702 beschrieben wurde, werden nachfolgend die beiden in Figur 7b dargestellten Blöcke 703 und 704 beschrieben.

Block 703 stellt ein im Zugfahrzeug angeordnetes ESP-System dar, mit dem die Gierwinkelgeschwindigkeit des Zugfahrzeuges geregelt wird. Dieses ESP-System verfügt über Sensormittel zur Erfassung der Radgeschwindigkeiten der einzelnen Räder des Zugfahrzeuges, des Lenkwinkels, der Querbeschleunigung und der Gierwinkelgeschwindigkeit. Unter Verwendung einer in Abhängigkeit der Radgeschwindigkeiten ermittelten Fahrzeuggeschwindigkeit und des Lenkwinkel wird mit Hilfe eines mathematischen Modells ein Sollwert für die Gierwinkelgeschwindigkeit ermittelt. Dieser wird mit dem für die Gierwinkelgeschwindigkeit ermittelten Istwert verglichen und bei Vorliegen einer Abweichung werden stabilisierende radindividuelle Bremseneingriffe und Motoreingriffe vorgenommen. Mit Hilfe der Bremseneingriffe werden auf das Zugfahrzeug wirkende Giermomente zur Kompensation eines über- oder untersteuernden Fahrverhaltens des Zugfahrzeuges erzeugt. Mit der Hilfe der Motoreingriffe wird das vom Motor abgegebene Motormoment reduziert, was letztlich zu einer Reduzierung der Fahrzeuggeschwindigkeit führt.

Ausgehend von dem ESP-System 703 werden Signale S_ESP dem Block 704 zugeführt. Die Signale S_ESP enthalten unter anderem die vom ESP-System ermittelten Ansteuersignale zur Durchführung der stabilisierenden Bremseneingriffe und weitere Signale, die im Block 704, unter anderem zur Ermittlung der Betriebszustände des Fahrzeuggespannes benötigt werden. Im Einzelfall handelt es sich um folgende Signale: Eine die Längsbeschleunigung des Fahrzeuggespannes beschreibende Größe. Eine Größe, die den Reibwert der Fahrbahn beschreibt, auf der sich das Fahrzeuggespann bewegt. Diese Größe wird beispielsweise gestützt auf eine die Querbeschleunigung beschreibende Größe und eine die Längsbeschleunigung beschreibende Größe geschätzt. Eine den Bremswunsch des Fahrers repräsentierende Größe, bei der es sich um eine die Bremspedalbetätigung repräsentierende Größe und/oder um eine den vom Fahrer eingestellten Vordruck repräsentierende Größe handelt.

Zusätzlich werden dem Block 704 das Flag Stab_Erk_P und die mit Hilfe der beiden Blöcke 701 und 702 erzeugten Ansteuersignale EHB_Eingriff_V zugeführt.

Solange das Flag Stab_Erk_P den Wert 0 aufweist, was gleichbedeutend damit ist, dass für das Fahrzeuggespann keine Schlingerbewegung vorliegt, werden als Signale EHB_Eingriff die von dem ESP-System 703 erzeugten Ansteuersignale ausgegeben. Sobald das Flag Stab_Erk_P den Wert 1 aufweist, was gleichbedeutend damit ist, dass für das Fahrzeuggespann eine Schlingerbewegung vorliegt, werden als Signale EHB_Eingriff für die Vorderräder die in den Blöcken 701 und 702 erzeugten Signale EHB_Eingriff_V und für die Hinterräder die Ansteuersignale ausgegeben, durch die dem jeweiligen Betriebszustand entsprechenden Bremseneingriffe an den Hinterrädern durchgeführt werden. Die Ansteuersignale für die Hinterräder werden im Block 704 erzeugt bzw. modifiziert.

An dieser Stelle sei angemerkt, dass die Funktion des im ESP-System enthaltenen unterlagerten Blockierschutzreglers permanent im Hintergrund mitläuft. Sobald für ein Rad eine Blockierneigung erkannt wird, werden entsprechende Bremseneingriffe zur Reduzierung des Bremsdruckes vorgenommen.

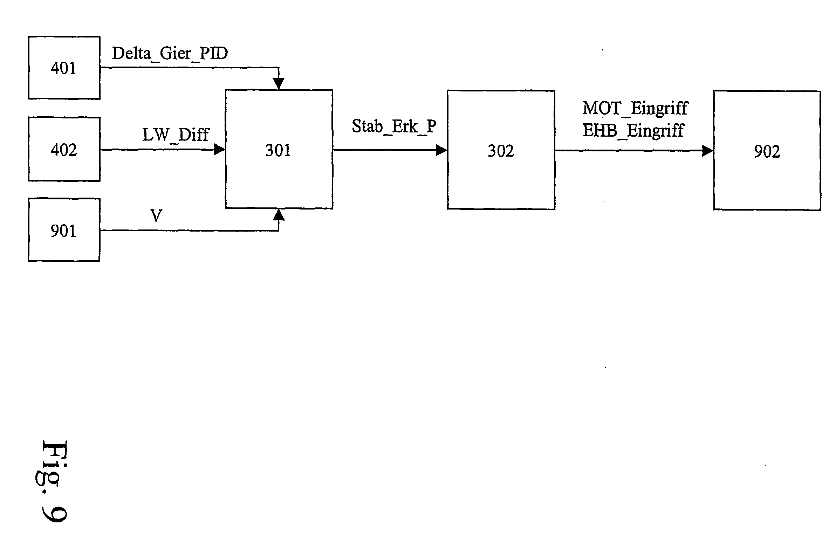

Nachfolgend wird auf Figur 9 eingegangen, die in Form eines Blockschaltbildes zum einen eine schematische Darstellung der erfindungsgemäßen Vorrichtung und zum anderen die wesentlichen Schritte des in der erfindungsgemäßen Vorrichtung ablaufenden erfindungsgemäßen Verfahrens zeigt. Dabei wird auf die Funktion bzw. den Aufbau der Blöcke 301, 302, 401 und 402 an dieser Stelle nicht mehr eingegangen, diese wurden vorstehend bereits ausführlich beschrieben.

Der Erkennungslogik 301 werden folgende Größen zugeführt: Ausgehend von dem Block 401 die Größe Delta_Gier_PID und ausgehend von dem Block 402 die Größe LW_Diff. Ausgehend von einem Block 901 wird der Erkennungslogik 301 zusätzlich die Größe V, bei der es sich um die Fahrzeuggeschwindigkeit handelt, zugeführt. Der Block 901 umfasst den einzelnen Fahrzeugrädern des Zugfahrzeuges 101 zugeordnete Raddrehzahlsensoren sowie geeignete Mittel, mit denen die von den Raddrehzahlsensoren bereitgetsellten Signale in die Größe V umgesetzt werden. In Abhängigkeit dieser zugeführten Größen wird in der Erkennungslogik 301 festgestellt, ob für das Fahrzeuggespann 104 eine Schlingerbewegung vorliegt oder nicht. Wird festgestellt, dass eine Schlingerbewegung vorliegt, dann gibt die Erkennungslogik 301 den Wert 1 für das Flag Stab_Erk_P aus. In der Eingriffslogik 302 werden bei vorliegendem Wert 1 für das Flag Stab_Erk_P die Größen MOT_Eingriff und EHB_Eingriff ermittelt, die einem Block 902 zugeführt werden. Mit Hilfe der einzelnen zu der Größe EHB-Eingriff zusammengefassten Ansteuersignale werden stabilisierende Bremseneingriffe durchgeführt. Hierzu können durch diese Ansteuersignale entweder direkt den einzelnen Fahrzeugrädern des Zugfahrzeuges 101 zugeordnete Bremsaktuatoren angesteuert werden, oder aber diese Anssteuersignale werden einem der Bremsanlage des Zugfahrzeuges 101 zugeordneten Steuergerät zugeführt. Mit Hilfe der Größe Mot_Eingriff werden zusätzlich Motoreingriffe vorgenommen. Bei dem Block 902 handelt es sich um die Bremsaktuatoren und/oder um das der Bremsanlage des Zugfahrzeuges zugeordnete Steuergerät und/oder um Aktuatoren zur Durchführung der Motoreingriffe.

Das Fahrzeug kann mit einer hydraulischen oder einer elektrohydraulischen oder einer pneumatischen oder einer elektropneumatischen oder einer elektromechanischen Bremsanlage ausgestattet sein. Wichtig ist, dass mit Hilfe dieser Bremsanlage fahrerunabhängige radindividuelle Bremseneingriffe durchführbar sind, und zwar dergestalt, dass an den einzelnen Rädern eine Bremskraft aufgebaut, gehalten oder abgebaut werden kann. Diese Bedingung erfüllen beispielsweise Bremsanlagen, wie sie heutzutage in Fahrzeugen eingesetzt werden, die mit einem Fahrdynamiksystem (ESP) ausgestattet sind. Mit Hilfe solch eines Fahrdynamiksystems wird das Fahrzeug um seine Hochachse durch Regelung der Gierwinkelgeschwindigkeit stabilisiert.

Zusätzlich zu den oder anstelle der stabilisierenden Bremseneingriffe können auch, wenn das Fahrzeug über eine entsprechende Aktuatorik verfügt, stabilisierende Lenkungseingriffe durchgeführt werden. Entsprechend den stabilisierenden Bremseneingriffen müssen auch diese Lenkungseingriffe phasenrichtig durchgeführt werden, damit durch diese ein der Schlingerbewegung des Fahrzeuggespannes entgegenwirkendes Giermoment erzeugt wird.

Bei den im Zusammenhang mit dem erfindungsgemäßen Verfahren bzw. der erfindungsgemäßen Vorrichtung betrachteten Fahrzeuggespannen soll es sich vorzugsweise um Gespanne aus dem PKW-Bereich handeln, die aus einem Zugfahrzeug und einem Anhänger, beispielsweise einem Wohnwagenanhänger, einem Autotransportanhänger oder einem Bootsanhänger bestehen. Es ist aber auch denkbar, das erfindungsgemäße Verfahren bzw. die erfindungsgemäße Vorrichtung bei Fahrzeuggespannen aus dem Nutzfahrzeugbereich einzusetzen, die aus einem Zugfahrzeug und einem Auflieger oder Deichselanhänger bestehen.

Obwohl vorstehend das erfindungsgemäße Verfahren bzw. die erfindungsgemäße Vorrichtung ausschließlich im Zusammenhang mit Fahrzeuggespannen beschrieben wurde, da die Problematik des Schlingerns in stärkerem Maße bei Fahrzeuggespannen auftritt und bei diesen weitaus gefährlicher als bei Einzelfahrzeugen ist, sei an dieser Stelle darauf hingewiesen, dass der Einsatz der erfindungsgemäßen Vorrichtung bzw. des erfindungsgemäßen Verfahrens ebenso für Einzelfahrzeuge denkbar ist.

Abschließend sei nochmals die dem erfindungsgemäßen Verfahren bzw. die der erfindungsgemäßen Vorrichtung zugrundeliegende Idee ohne Berücksichtigung des bereits bestehenden Standes der Technik zusammengefasst: Das erfindungsgemäße Verfahren betrifft ein Verfahren zur Stabilisierung eines Fahrzeuggespannes, welches aus einem Zugfahrzeug und einem Anhänger besteht, wobei wenigstens eine fahrdynamische Eingangsgröße ermittelt und ausgewertet wird, und wobei für das Zugfahrzeug ein Bremseneingriff und/oder Motoreingriff zur Stabilisierung des Fahrdynamikzustandes des Fahrzeuggespanns veranlasst wird, wenn anhand der Auswertung ein instabiler Fahrdynamikzustand festgestellt wird.

## Patentansprüche

1. Verfahren zur Stabilisierung eines Fahrzeuggespannes (104), welches aus einem Zugfahrzeug (101) und einem Anhänger oder Auflieger (102) besteht, wobei das Zugfahrzeug (101) Vorderräder (103vl, 103vr) und Hinterräder (103hl, 103hr) aufweist, wobei wenigstens eine fahrdynamische Eingangsgröße (GIER_ROH) ermittelt und ausgewertet wird, wobei für das Zugfahrzeug (101) wenigstens Bremseneingriffe zur Stabilisierung des Fahrdynamikzustandes des Fahrzeuggespanns (104) veranlasst werden, wenn anhand der Auswertung eine Schlingerbewegung des Fahrzeuggespannes (104) festgestellt wird, und wobei allein durch für die Vorderräder (103vl, 103vr) des Zugfahrzeuges (101) veranlasste Bremseneingriffe ein der Schlingerbewegung des Fahrzeuggespannes (104) entgegenwirkendes Giermoment erzeugt wird,
**dadurch gekennzeichnet,**
**dass** nur bei Vorliegen eines vorgegebenen Betriebszustandes des Fahrzeuggespannes (104) zusätzlich Bremseneingriffe für die Hinterräder (103hl, 103hr) des Zugfahrzeuges (101) zugelassen oder veranlasst werden, wobei durch die zusätzlich für die Hinterräder (103hl, 103hr) zugelassenen oder veranlassten Bremseneingriffe an den Hinterrädern (103hl, 103hr) eine im wesentlichen konstante Bremswirkung erzielt wird.

2. Verfahren nach Anspruch 1,
**dadurch gekennzeichnet,**
**dass** der vorgegebene Betriebszustand des Fahrzeuggespannes (104), bei dem Bremseneingriffe für die Hinterräder (103hl, 103hr) zugelassen werden, dann vorliegt, wenn eine Schlingerbewegung des Fahrzeuggespannes (104) festgestellt wird und gleichzeitig keine Bremsung durch den Fahrer vorliegt und sich das Fahrzeuggespann (104) auf einer Fahrbahn mit niedrigem Reibwert befindet.

3. Verfahren nach Anspruch 1,
**dadurch gekennzeichnet,**
**dass** der vorgegebene Betriebszustand des Fahrzeuggespannes (104), bei dem Bremseneingriffe für die Hinterräder (103hl, 103hr) veranlasst werden, dann vorliegt, wenn eine Schlingerbewegung des Fahrzeuggespannes (104) festgestellt wird und gleichzeitig keine Bremsung durch den Fahrer vorliegt und die für die Vorderräder (103vl, 103vr) veranlassten Bremseneingriffe dazu führen, dass die Vorderräder (103vl, 103vr) zu blockieren drohen.

4. Verfahren nach Anspruch 1,
**dadurch gekennzeichnet,**
**dass** für den Fall, dass eine Schlingerbewegung des Fahrzeuggespannes (104) festgestellt wird und keine Bremsung durch den Fahrer vorliegt und sich das Fahrzeuggespann (104) auf einer Fahrbahn mit niedrigem Reibwert befindet, zusätzlich Bremseneingriffe für die Hinterräder (103hl, 103hr) zugelassen werden.

5. Verfahren nach Anspruch 1,
**dadurch gekennzeichnet,**
**dass** für den Fall, dass eine Schlingerbewegung des Fahrzeuggespannes (104) festgestellt wird und keine Bremsung durch den Fahrer vorliegt und die für die Vorderräder (103vl, 103vr) veranlassten Bremseneingriffe dazu führen, dass die Vorderräder (103vl, 103vr) zu blockieren drohen, zusätzlich Bremseneingriffe für die Hinterräder (103hl, 103hr) veranlasst werden.

6. Verfahren nach Anspruch 1,
**dadurch gekennzeichnet,**
**dass** der vorgegebene Betriebszustand des Fahrzeuggespannes (104), bei dem Bremseneingriffe für die Hinterräder (103hl, 103hr) veranlasst werden, dann vorliegt, wenn die Schlingerbewegung während eines vom Fahrer eingeleiteten oder durchgeführten Bremsvorganges festgestellt wird und die sich aufgrund des vom Fahrer eingeleiteten oder durchgeführten Bremsvorganges einstellende Fahrzeugverzögerung ein vorgegebenes Vergleichskriterium erfüllt.

7. Verfahren nach Anspruch 1,
**dadurch gekennzeichnet,**
**dass** für den Fall, dass die Schlingerbewegung während eines vom Fahrer eingeleiteten oder durchgeführten Bremsvorganges festgestellt wird und die sich aufgrund des vom Fahrer eingeleiteten oder durchgeführten Bremsvorganges einstellende Fahrzeugverzögerung ein vorgegebenes Vergleichskriterium erfüllt, zusätzliche Bremseneingriffe für die Hinterräder (103hl, 103hr) veranlasst werden.

8. Verfahren nach Anspruch 6 oder 7,
**dadurch gekennzeichnet,**
**dass** für den Fall, dass die sich einstellende Fahrzeugverzögerung unterhalb eines vorgegebenen Schwellenwertes liegt, die sich an den Hinterrädern (103hl, 103hr) aufgrund des vom Fahrer eingeleiteten oder durchgeführten Bremsvorganges eingestellte Bremswirkung durch die für die Hinterräder (103hl, 103hr) veranlassten Bremseneingriffe zumindest teilweise abgebaut wird.

9. Verfahren nach Anspruch 8,
**dadurch gekennzeichnet,**
**dass** die Bremswirkung so weit abgebaut wird, dass der Wert der Fahrzeugverzögerung, die sich aufgrund des vom Fahrer eingeleiteten oder durchgeführten Bremsvorganges eingestellt hat, zumindest erhalten bleibt.

10. Verfahren nach Anspruch 6 oder 7,
**dadurch gekennzeichnet,**
**dass** für den Fall, dass die sich einstellende Fahrzeugverzögerung oberhalb eines vorgegebenen Schwellenwertes liegt, die sich an den Hinterrädern (103hl, 103hr) aufgrund des vom Fahrer eingeleiteten oder durchgeführten Bremsvorganges eingestellte Bremswirkung durch die für die Hinterräder (103hl, 103hr) veranlassten Bremseneingriffe zumindest beibehalten bleibt.

11. Verfahren nach Anspruch 10,
**dadurch gekennzeichnet,**
**dass** für den Fall, dass an einem oder beiden Vorderrädern (103vl, 103vr) ein Eingriff eines Blockierschutzreglers erfolgt, durch die für die Hinterräder (103hl, 103hr) veranlassten Bremseneingriffe an der Hinterachse eine zusätzliche Bremswirkung aufgebaut wird.

12. Verfahren nach Anspruch 11,
**dadurch gekennzeichnet,**
**dass** der Aufbau der zusätzlichen Bremswirkung an der Hinterachse dergestalt erfolgt, dass der Wert der Fahrzeugverzögerung, die sich aufgrund des vom Fahrer eingeleiteten oder durchgeführten Bremsvorganges eingestellt hat, erhalten bleibt.

13. Verfahren nach Anspruch 1,
**dadurch gekennzeichnet**,
das die für die Vorderräder (103vl, 103vr) veranlassten Bremseneingriffe Bremskräfte bewirken, die sich jeweils aus einer Basiskraft und einem dynamischen Kraftanteil zusammensetzen.

14. Verfahren nach Anspruch 1,
**dadurch gekennzeichnet,**
**dass** zumindest das Zugfahrzeug (101) mit einer hydraulischen oder elektrohydraulischen oder pneumatischen oder elektropneumatischen Bremsanlage ausgestattet ist, wobei die für die Vorderräder (103vl, 103vr) veranlassten Bremseneingriffe dazu führen, dass in die den Vorderrädern (103vl, 103vr) zugeordneten Radbremszylinder jeweils ein Bremsdruck eingespeist wird, der sich aus einem Basisdruck und dynamischen Druckspitzen zusammensetzt.

15. Verfahren nach Anspruch 13 oder 14,
**dadurch gekennzeichnet,**
**dass** das der Schlingerbewegung des Fahrzeuggespannes (104) entgegenwirkende Giermoment durch den dynamischen Kraftanteil oder die dynamischen Druckspitzen erzeugt wird.

16. Verfahren nach Anspruch 13 oder 14,
**dadurch gekennzeichnet,**
**dass** der Wert der Basiskraft oder der Wert des Basisdruckes in Abhängigkeit einer für die Gierwinkelgeschwindigkeit vorliegenden Abweichung ermittelt wird, insbesondere ergibt sich die Abweichung aus der Differenz des mit Hilfe eines Gierwinkelgeschwindigkeitssensors ermittelten Istwertes (GIER_ROH) für die Gierwinkelgeschwindigkeit und einem mit Hilfe eines mathematischen Modells ermittelten Sollwert (Gier_Stat) für die Gierwinkelgeschwindigkeit.

17. Verfahren nach Anspruch 13 oder 14,
**dadurch gekennzeichnet,**
**dass** der Wert für den dynamischen Kraftanteil oder der Wert für die dynamischen Druckspitzen in Abhängigkeit einer Größe ermittelt wird, die die zeitliche Änderung einer für die Gierwinkelgeschwindigkeit vorliegenden Abweichung beschreibt.

18. Verfahren nach Anspruch 14,
**dadurch gekennzeichnet,**
**dass** sowohl der Basisdruck als auch die dynamischen Druckspitzen mit abnehmender Schlingerbewegung abnehmen.

19. Verfahren nach Anspruch 1,
**dadurch gekennzeichnet,**
**dass** ergänzend zu den Bremseneingriffen auch Motoreingriffe durchgeführt werden, wobei durch diese Motoreingriffe das vom Motor abgegebene Moment so eingestellt wird, dass an den Antriebsrädern des Zugfahrzeuges keine bzw. nahe bei Null liegende Umfangskräfte vorkommen.

20. Verfahren nach Anspruch 1,
**dadurch gekennzeichnet,**
**dass** ergänzend zu den Bremseneingriffen auch Motoreingriffe durchgeführt werden, wobei durch diese Motoreingriffe das vom Motor abgegebene Moment so eingestellt wird, dass die im Antriebsstrang entstehenden Reibungsverluste kompensiert werden und die Antriebsräder, was die Umfangskraft angeht, neutral gestellt werden.

21. Verfahren nach Anspruch 1,
**dadurch gekennzeichnet,**
**dass**, nachdem die stabilisierenden Bremseneingriffe eingeleitet wurden, überprüft wird, ob die Instabilität des Fahrzeuggespannes (104) abnimmt, wobei dann, wenn das Fahrzeuggespann (104) wieder einen stabilen Zustand erreicht hat, keine stabilisierenden Bremseneingriffe mehr erzeugt werden und gleichzeitig das Antriebsmoment entsprechend der Vorgabe der Fahrers, die sich aus der Betätigung des Fahrpedals herleiten lässt, eingestellt wird.

22. Verfahren nach Anspruch 1,
**dadurch gekennzeichnet,**
**dass** die Bremseneingriffe an den Vorderrädern (103vl, 103vr) in Abhängigkeit des Wertes des erfassten, auf das Fahrzeug wirkenden Giermomentes und/oder in Abhängigkeit des Wertes der erfassten Gierbeschleunigung durchgeführt werden.

23. Verfahren nach Anspruch 1,
**dadurch gekennzeichnet,**
**dass** als fahrdynamische Eingangsgröße zumindest die Gierwinkelgeschwindigkeit (GIER_ROH) des Zugfahrzeuges ermittelt und ausgewertet wird.

24. Verfahren nach Anspruch 1,
**dadurch gekennzeichnet,**
**dass** zur Erkennung, ob eine Schlingerbewegung vorliegt, die Fahrzeuggeschwindigkeit (V), die Gierwinkelgeschwindigkeit (GIER_ROH) und der Lenkwinkel (LW) ausgewertet wird.

25. Verfahren nach Anspruch 1 oder 24,
**dadurch gekennzeichnet,**
**dass** eine Schlingerbewegung dann vorliegt, wenn in einem Betriebszustand des Fahrzeuggespannes (104), bei dem die Fahrzeuggeschwindigkeit (V) größer als ein zugehöriger Schwellenwert ist, die Gierwinkelgeschwindigkeit ein oszillierendes Verhalten zeigt, obwohl der Fahrer keine Lenkeingriffe vornimmt

26. Verfahren nach Anspruch 1,
**dadurch gekennzeichnet,**
**dass** das Vorliegen einer Schlingerbewegung des Fahrzeuggespannes (104) in Abhängigkeit einer Abweichungsgröße (Delta_Gier_PID) festgestellt wird, in die die Abweichung des Istwertes (GIER_ROH) der Gierwinkelgeschwindigkeit von einem zugehörigen Sollwert (Gier_Stat) eingeht.

27. Vorrichtung zur Stabilisierung eines Fahrzeuggespannes (104), welches aus einem Zugfahrzeug (101) und einem Anhänger oder Auflieger (102) besteht, wobei das Zugfahrzeug (101) Vorderräder (103vl, 103vr) und Hinterräder (103hl, 103hr) aufweist, wobei die Vorrichtung Mittel (301, 401, 402, 901) zur Ermittlung und Auswertung von wenigstens einer fahrdynamischen Eingangsgröße umfasst, wobei die Vorrichtung ferner Mittel (302, 902) umfasst, mit denen für das Zugfahrzeug wenigstens Bremseneingriffe zur Stabilisierung des Fahrdynamikzustandes des Fahrzeuggespanns veranlasst werden, wenn anhand der Auswertung eine Schlingerbewegung des Fahrzeuggespannes festgestellt wird, und wobei allein durch die für die Vorderräder (103vl, 103vr) des Zugfahrzeuges (101) veranlassten Bremseneingriffe ein der Schlingerbewegung des Fahrzeuggespannes (104) entgegenwirkendes Giermoment erzeugt wird,
**dadurch gekennzeichnet,**
**dass** nur bei Vorliegen eines vorgegebenen Betriebszustandes des Fährzeuggespannes (104) zusätzlich Bremseneingriffe für die Hinterräder (103hl, 103hr) des Zugfahrzeuges (101) zugelassen oder veranlasst werden, wobei durch die zusätzlich für die Hinterräder (103hl, 103hr) zugelassenen oder veranlassten Bremseneingriffe an den Hinterrädern (103hl, 103hr) eine im wesentlichen konstante Bremswirkung erzielt wird.

## Claims

1. Method for stabilizing a vehicle combination (104) which is composed of a towing vehicle (101) and a trailer or semitrailer (102), wherein the towing vehicle (101) has front wheels (103vl, 103vr) and rear wheels (103hl, 103hr), wherein at least one dynamic movement input variable (GIER_ROH) is determined and evaluated, wherein at least braking interventions for stabilizing the dynamic movement state of the vehicle combination (104) are brought about for the towing vehicle (101) if a rolling movement of the vehicle combination (104) is detected by means of the evaluation, and wherein a yaw moment which counteracts the rolling movement of the vehicle combination (104) is produced solely by means of braking interventions which are brought about for the front wheels (103vl, 103vr) of the towing vehicle (101), **characterized in that** braking interventions for the rear wheels (103hl, 103hr) of the towing vehicle (101) are additionally permitted or brought about only when a predefined operating state of the vehicle combination (104) is present, wherein an essentially constant braking effect is achieved at the rear wheels (103hl, 103hr) by the braking interventions which are additionally permitted or brought about for the rear wheels (103hl, 103hr).

2. Method according to Claim 1, **characterized in that** the predefined operating state of the vehicle combination (104), in which braking interventions for the rear wheels (103hl, 103hr) are permitted, is present if a rolling movement of the vehicle combination (104) is detected and at the same time there is no braking by the driver and the vehicle combination (104) is located on an underlying surface with a low coefficient of friction.

3. Method according to Claim 1, **characterized in that** the predefined operating state of the vehicle combination (104), in which braking interventions for the rear wheels (103hl, 103hr) are brought about, is present if a rolling movement of the vehicle combination (104) is detected and at the same time there is no braking by the driver and the braking interventions which are brought about for the front wheels (103vl, 103vr) lead to a risk of the front wheels (103vl, 103vr) locking.

4. Method according to Claim 1, **characterized in that** braking interventions for the rear wheels (103hl, 103hr) are additionally permitted if a rolling movement of the vehicle combination (104) is detected and there is no braking by the driver and the vehicle combination (104) is located on an underlying surface with a low coefficient of friction.

5. Method according to Claim 1, **characterized in that** braking interventions for the rear wheels (103hl, 103hr) are additionally brought about if a rolling movement of the vehicle combination (104) is detected and there is no braking by the driver and the braking interventions which are brought about for the front wheels (103vl, 103vr) lead to a risk of the front wheels (103vl, 103vr) locking.

6. Method according to Claim 1, **characterized in that** the predefined operating state of the vehicle combination (104), in which braking interventions for the rear wheels (103hl, 103hr) are brought about, is present if the rolling movement is detected during a braking process which is initiated or carried out by the driver and the vehicle deceleration occurring as a result of the braking process which is initiated or carried out by the driver fulfills a predefined comparative criterion.

7. Method according to Claim 1, **characterized in that** braking interventions for the rear wheels (103hl, 103hr) are additionally brought about if the rolling movement is detected during a braking process which is initiated or carried out by the driver and the vehicle deceleration occurring as a result of the braking process which is initiated or carried out by the driver fulfills a predefined comparative criterion.

8. Method according to Claim 6 or 7, **characterized in that** if the vehicle deceleration which occurs is below a predefined threshold value, the braking effect which occurs at the rear wheels (103hl, 103hr) as a result of the braking process which is initiated or carried out by the driver is at least partially reduced by the braking interventions which are brought about for the rear wheels (103hl, 103hr).

9. Method according to Claim 8, **characterized in that** the braking effect is reduced to such an extent that the value of the vehicle deceleration which has occurred as a result of the braking process which is initiated or carried out by the driver is at least maintained.

10. Method according to Claim 6 or 7, **characterized in that** if the vehicle deceleration which occurs is above a predefined threshold value, the braking effect which occurs at the rear wheels (103hl, 103hr) as a result of the braking process which is initiated or carried out by the driver is at least maintained by the braking interventions which are brought about for the rear wheels (103hl, 103hr).

11. Method according to Claim 10, **characterized in that** if an intervention of an anti-lock brake system is made at one front wheel or both front wheels (103vl, 103vr), an additional braking effect is increased at the rear axle end by the braking interventions which are brought about for the rear wheels (103hl, 103hr).

12. Method according to Claim 11, **characterized in that** the increase in the additional braking effect at the rear axle is carried out in such a way that the value of the vehicle deceleration which has occurred as a result of the braking process which is initiated or carried out by the driver is maintained.

13. Method according to Claim 1, **characterized in that** the braking interventions which are brought about for the front wheels (103vl, 103vr) give rise to braking forces which are composed in each case of a basic force and a dynamic force component.

14. Method according to Claim 1, **characterized in that** at least the towing vehicle (101) is equipped with a hydraulic or electrohydraulic or pneumatic or electropneumatic brake system, wherein the braking interventions which are brought about for the front wheels (103vl, 103vr) lead to a situation in which in each case a brake pressure which is composed of a basic pressure and dynamic pressure peaks is fed into the wheel brake cylinders assigned to the front wheels (103vl, 103vr).

15. Method according to Claim 13 or 14, **characterized in that** the yaw moment which counteracts the rolling movement of the vehicle combination (104) is produced by the dynamic force component or the dynamic pressure peaks.

16. Method according to Claim 13 or 14, **characterized in that** the value of the basic force or the value of the basic pressure is determined as a function of a deviation in the yaw angle rate, in particular the deviation results from the difference between the actual value (GIER_ROH) for the yaw angle rate which is determined using a yaw angle rate sensor and a setpoint value (Gier_Stat) for the yaw angle rate which is determined using a mathematical model.

17. Method according to Claim 13 or 14, **characterized in that** the value for the dynamic force component or the value for the dynamic pressure peaks is determined as a function of a variable which describes the change over time of a deviation in the yaw angle rate.

18. Method according to Claim 14, **characterized in that** both the basic pressure and the dynamic pressure peaks decrease as the rolling movement decreases.

19. Method according to Claim 1, **characterized in that** engine interventions are also carried out in addition to the braking interventions, wherein the moment which is output by the engine is set by means of these engine interventions in such a way that no circumferential forces, or circumferential forces which are near to zero, occur at the driven wheels of the towing vehicle.

20. Method according to Claim 1, **characterized in that** engine interventions are also carried out in addition to the braking interventions, wherein the torque which is output by the engine is set by means of these engine interventions in such a way that the friction losses which occur in the drive train are compensated and the driven wheels are given a neutral setting as far as the circumferential force is concerned.

21. Method according to Claim 1, **characterized in that** after the stabilizing braking interventions have been initiated, it is checked whether the instability of the vehicle combination (104) decreases, wherein, when the vehicle combination (104) has reached a stable state again, no further stabilizing braking interventions are produced and at the same time the drive torque is set in accordance with the value which is predefined by the driver and which can be derived from the activation of the accelerator pedal.

22. Method according to Claim 1, **characterized in that** the braking interventions are carried out at the front wheels (103vl, 103vr) as a function of the value of the sensed yaw moment which acts in the vehicle and/or as a function of the value of the sensed yaw acceleration.

23. Method according to Claim 1, **characterized in that** at least the yaw angle rate (GIER_ROH) of the towing vehicle is determined and evaluated as a dynamic movement input variable.

24. Method according to Claim 1, **characterized in that** the vehicle speed (V), the yaw angle rate (GIER_ROH) and the steering angle (LW) are evaluated in order to determine whether a rolling movement is occurring.

25. Method according to Claim 1 or 24, **characterized in that** a rolling movement is occurring if the yaw angle rate exhibits an oscillating behavior in an operating state of the vehicle combination (104) in which the vehicle speed (V) is higher than an associated threshold value, even though the driver is not making any steering interventions.

26. Method according to Claim 1, **characterized in that** the presence of a rolling movement of the vehicle combination (104) is detected as a function of a deviation variable (Delta_Gier_PID) which includes the deviation between the actual value (GIER_ROH) of the yaw angle rate and an associated setpoint value (Gier_Stat).

27. Device for stabilizing a vehicle combination (104) which is composed of a towing vehicle (101) and a trailer or semitrailer (102), wherein the towing vehicle (101) has front wheels (103vl, 103vr) and rear wheels (103hl, 103hr), wherein the device comprises means (301, 401, 402, 901) for determining and evaluating at least one dynamic movement input variable, wherein the device also comprises means (302, 902) with which at least braking interventions for stabilizing the dynamic movement state of the vehicle combination are brought about for the towing vehicle if a rolling movement of the vehicle combination is detected by means of the evaluation, and wherein a yaw moment which counteracts the rolling movement of the vehicle combination (104) is produced solely by means of the braking interventions which are brought about for the front wheels (103vl, 103vr) of the towing vehicle (101), **characterized in that** braking interventions for the rear wheels (103hl, 103hr) of the towing vehicle (101) are additionally permitted or brought about only when a predefined operating state of the vehicle combination (104) is present, wherein an essentially constant braking effect is achieved at the rear wheels (103hl, 103hr) by the braking interventions which are additionally permitted or brought about for the rear wheels (103hl, 103hr).

## Revendications

1. Procédé de stabilisation d'un attelage de véhicule (104) qui est constitué d'un véhicule tracteur (101) et d'une remorque ou semi-remorque (102), le véhicule tracteur (101) comportant des roues avant (103vl, 103vr) et des roues arrière (103hl, 103hr), dans lequel au moins une grandeur d'entrée relative à la dynamique du mouvement (GIER_ROH) est déterminée et évaluée, dans lequel au moins des interventions des freins pour la stabilisation de l'état dynamique du mouvement de l'attelage de véhicule (104) pour le véhicule tracteur (101) sont initiées lorsque, à l'aide de l'évaluation, un mouvement de roulis de l'attelage de véhicule (104) est détecté et dans lequel un couple d'embardée opposé au mouvement de roulis de l'attelage de véhicule (104) est généré uniquement par les interventions des freins initiées pour les roues avant (103vl, 103vr) du véhicule tracteur (101), **caractérisé en ce que** des interventions des freins supplémentaires pour les roues arrière (103hl, 103hr) du véhicule tracteur (101) sont autorisées ou initiées uniquement en présence d'un état de fonctionnement prédéterminé de l'attelage de véhicule (104), un effet de freinage sensiblement constant étant obtenu dans les roues arrière (103hl, 103hr) par les interventions des freins autorisées ou initiées en plus pour les roues arrière (103hl, 103hr).

2. Procédé selon la revendication 1, **caractérisé en ce que** l'état de fonctionnement prédéterminé de l'attelage de véhicule (104), dans lequel des interventions des freins sont autorisées pour les roues arrière (103hl, 103hr), se présente lorsqu'un mouvement de roulis de l'attelage de véhicule (104) est détecté et qu'en même temps, aucun freinage n'est effectué par le conducteur et que l'attelage de véhicule (104) se trouve sur une chaussée avec un faible coefficient de frottement.

3. Procédé selon la revendication 1, **caractérisé en ce que** l'état de fonctionnement prédéterminé de l'attelage de véhicule (104), dans lequel des interventions des freins sont initiées pour les roues arrière (103hl, 103hr), se présente lorsqu'un mouvement de roulis de l'attelage de véhicule (104) est détecté et qu'en même temps, aucun freinage n'est effectué par le conducteur et que les interventions des freins initiées pour les roues avant (103vl, 103vr) entraînent une menace de blocage des roues avant (103vl, 103vr).

4. Procédé selon la revendication 1, **caractérisé en ce que** dans le cas où un mouvement de roulis de l'attelage de véhicule (104) est détecté et où aucun freinage n'est effectué par le conducteur et où l'attelage de véhicule (104) se trouve sur une chaussée avec un faible coefficient de frottement, des interventions des freins sont autorisées en plus pour les roues arrière (103hl, 103hr).

5. Procédé selon la revendication 1, **caractérisé en ce que** dans le cas où un mouvement de roulis de l'attelage de véhicule (104) est détecté et où aucun freinage n'est effectué par le conducteur et où les interventions des freins initiées pour les roues avant (103vl, 103vr) entraînent une menace de blocage des roues avant (103vl, 103vr), des interventions des freins sont initiées en plus pour les roues arrière (103hl, 103hr).

6. Procédé selon la revendication 1, **caractérisé en ce que** l'état de fonctionnement prédéterminé de l'attelage de véhicule (104), dans lequel des interventions des freins sont initiées pour les roues arrière (103hl, 103hr), se présente lorsque le mouvement de roulis est détecté pendant un processus de freinage amorcé ou réalisé par le conducteur et que la décélération du véhicule qui se produit en raison du processus de freinage amorcé ou réalisé par le conducteur satisfait à un critère de comparaison prédéterminé.

7. Procédé selon la revendication 1, **caractérisé en ce que** dans le cas où le mouvement de roulis est détecté pendant un processus de freinage amorcé ou réalisé par le conducteur et où la décélération du véhicule qui se produit en raison du processus de freinage amorcé ou réalisé par le conducteur satisfait à un critère de comparaison prédéterminé, des interventions des freins supplémentaires sont initiées pour les roues arrière (103hl, 103hr).

8. Procédé selon la revendication 6 ou 7, **caractérisé en ce que** dans le cas où la décélération du véhicule qui se produit est inférieure à une valeur seuil prédéterminée, l'effet de freinage produit dans les roues arrière (103hl, 103hr) en raison du processus de freinage amorcé ou réalisé par le conducteur est au moins partiellement réduit par les interventions des freins initiées pour les roues arrière (103hl, 103hr).

9. Procédé selon la revendication 8, **caractérisé en ce que** l'effet de freinage est réduit de telle manière que la valeur de la décélération du véhicule qui s'est produite en raison du processus de freinage amorcé ou réalisé par le conducteur est au moins conservée.

10. Procédé selon la revendication 6 ou 7, **caractérisé en ce que** dans le cas où la décélération du véhicule qui se produit est supérieure à une valeur seuil prédéterminée, l'effet de freinage produit dans les roues arrière (103hl, 103hr) en raison du processus de freinage amorcé ou réalisé par le conducteur est au moins conservé par les interventions des freins initiées pour les roues arrière (103hl, 103hr).

11. Procédé selon la revendication 10, **caractérisé en ce que** dans le cas où une intervention d'un régulateur antiblocage est réalisée dans l'une des deux ou dans les deux roues avant (103vl, 103vr), un effet de freinage supplémentaire est généré sur l'essieu arrière par les interventions des freins initiées pour les roues arrière (103hl, 103hr).

12. Procédé selon la revendication 11, **caractérisé en ce que** la génération de l'effet de freinage supplémentaire sur l'essieu arrière est réalisée de telle manière que la valeur de la décélération du véhicule qui s'est produite en raison du processus de freinage amorcé ou réalisé par le conducteur est conservée.

13. Procédé selon la revendication 1, **caractérisé en ce que** les interventions des freins initiées pour les roues avant (103vl, 103vr) génèrent des forces de freinage qui se décomposent entre une force de base et une portion de force dynamique.

14. Procédé selon la revendication 1, **caractérisé en ce qu'**au moins le véhicule tracteur (101) est équipé d'un dispositif de freinage hydraulique ou électro-hydraulique ou pneumatique ou électro-pneumatique, les interventions des freins initiées pour les roues avant (103vl, 103vr) conduisant à ce qu'une pression de freinage, qui se décompose entre une pression de base et des pointes de pression dynamiques, soit alimentée dans les cylindres de freins de roues associés aux roues avant (103vl, 103vr).

15. Procédé selon la revendication 13 ou 14, **caractérisé en ce que** le couple d'embardée opposé au mouvement de roulis de l'attelage de véhicule (104) est généré par la portion de force dynamique ou par les pointes de pression dynamiques.

16. Procédé selon la revendication 13 ou 14, **caractérisé en ce que** la valeur de la force de base ou la valeur de la pression de base est déterminée en fonction d'un écart présent pour la vitesse angulaire d'embardée, en particulier l'écart est obtenu à partir de la différence de la valeur réelle (GIER_ROH) pour la vitesse angulaire d'embardée déterminée à l'aide d'un détecteur de vitesse angulaire d'embardée et d'une valeur consigne (Gier_Stat) pour la vitesse angulaire d'embardée déterminée à l'aide d'un modèle mathématique.

17. Procédé selon la revendication 13 ou 14, **caractérisé en ce que** la valeur pour la portion de force dynamique ou la valeur pour les pointes de pression dynamiques est déterminée en fonction d'une grandeur qui décrit la variation dans le temps d'un écart présent pour la vitesse angulaire d'embardée.

18. Procédé selon la revendication 14, **caractérisé en ce que** la pression de base ainsi que les pointes de pression dynamiques diminuent au fur et à mesure que le mouvement de roulis diminue.

19. Procédé selon la revendication 1, **caractérisé en ce qu'**en complément des interventions des freins, des interventions du moteur sont également réalisées, ces interventions du moteur permettant de régler le couple généré par le moteur de telle manière qu'aucune force périphérique ou des forces périphériques pratiquement nulles se produisent dans les roues motrices du véhicule tracteur.

20. Procédé selon la revendication 1, **caractérisé en ce qu'**en complément des interventions des freins, des interventions du moteur sont également réalisées, ces interventions du moteur permettant de régler le couple généré par le moteur de telle manière que les pertes par frottement produites dans la ligne de commande sont compensées et les roues motrices sont mises en position neutre en ce qui concerne la force périphérique.

21. Procédé selon la revendication 1, **caractérisé en ce qu'**une fois que les interventions des freins stabilisatrices ont été initiées, on vérifie si l'instabilité de l'attelage de véhicule (104) diminue, sachant que lorsque l'attelage de véhicule (104) a de nouveau atteint un état stable, aucune intervention des freins stabilisatrice n'est plus initiée et, en même temps, le couple moteur est réglé en fonction de la spécification du conducteur que l'on peut déduire de l'actionnement de la pédale d'accélérateur.

22. Procédé selon la revendication 1, **caractérisé en ce que** les interventions des freins sont réalisées pour les roues avant (103vl, 103vr) en fonction de la valeur du couple d'embardée détecté agissant sur le véhicule et/ou en fonction de la valeur de l'accélération d'embardée détectée.

23. Procédé selon la revendication 1, **caractérisé en ce qu'**au moins la vitesse angulaire d'embardée (GIER_ROH) du véhicule moteur est détectée et évaluée comme grandeur d'entrée relative à la dynamique du mouvement.

24. Procédé selon la revendication 1, **caractérisé en ce que** pour déterminer si un mouvement de roulis est présent, la vitesse du véhicule (V), la vitesse angulaire d'embardée (GIER_ROH) et l'angle de braquage (LW) sont évalués.

25. Procédé selon la revendication 1 ou 24, **caractérisé en ce qu'**un mouvement de roulis est présent lorsque, dans un état de fonctionnement de l'attelage de véhicule (104) dans lequel la vitesse du véhicule (V) est supérieure à une valeur seuil associée, la vitesse angulaire d'embardée présente un comportement oscillant alors que le conducteur ne procède à aucune intervention de braquage.

26. Procédé selon la revendication 1, **caractérisé en ce que** la présence d'un mouvement de roulis de l'attelage de véhicule (104) est déterminée en fonction d'une grandeur d'écart (Delta_Gier_PID) dans laquelle intervient l'écart de la valeur réelle (GIER_ROH) de la vitesse angulaire d'embardée par rapport à une valeur consigne associée (Gier_Stat).

27. Dispositif de stabilisation d'un attelage de véhicule (104) qui est constitué d'un véhicule tracteur(101) et d'une remorque ou semi-remorque (102), le véhicule tracteur (101) comportant des roues avant (103vl, 103vr) et des roues arrière (103hl, 103hr), dans lequel le dispositif comprend des moyens (301, 401, 402, 901) pour déterminer et évaluer au moins une grandeur d'entrée relative à la dynamique du mouvement, dans lequel le dispositif comprend, en outre, des moyens (302, 902) avec lesquels au moins des interventions des freins pour la stabilisation de l'état dynamique du mouvement de l'attelage de véhicule pour le véhicule tracteur sont initiées lorsque, à l'aide de l'évaluation, un mouvement de roulis de l'attelage de véhicule est détecté et dans lequel un couple d'embardée opposé au mouvement de roulis de l'attelage de véhicule (104) est généré uniquement par les interventions des freins initiées pour les roues avant (103vl, 103vr) du véhicule tracteur (101), **caractérisé en ce que** des interventions des freins supplémentaires pour les roues arrière (103hl, 103hr) du véhicule tracteur (101) sont autorisées ou initiées uniquement en présence d'un état de fonctionnement prédéterminé de l'attelage de véhicule (104), un effet de freinage sensiblement constant étant obtenu dans les roues arrière (103hl, 103hr) par les interventions des freins autorisées ou initiées en plus pour les roues arrière (103hl, 103hr).
